# EUROPEAN PATENT APPLICATION

(11) **EP 4 446 091 A1**
(43) Date of publication of application: **16.10.2024**
(21) Application number: 24151413.2
(22) Date of filing: 11.01.2024
(51) Int. Cl.: B29C 57/04

(54) **PEX EXPANDER**

(30) Priority: 12.01.2023 US 202363438740 P; 10.01.2024 US 202418409669
(71) Applicant: Black & Decker Inc., New Britain, CT 06053 (US)
(72) Inventor: LI, Qingyang, 215129 Suzhou (CN); LUO, Bingxin, 215000 Suzhou (CN); XU, Chenyang, 215100 Suzhou (CN); PENG, Kailang, 215024 Suzhou (CN); WANG, Guotao, 215021 Suzhou (CN); BURKE, Justin, 15202 Bellevue (US)
(74) Representative: SBD IPAdmin

(57) **Abstract**

An expanding tool for widening pipe ends having an ergonomic design. The expanding tool uses a transmission which drives a cam offset at a distance from a motor axis to drive a number of jaws which move from a closed position to an open position to widen a pipe end. The expanding tool has a balanced positioning of components across the expanding tool's length achieving ergonomic benefits for a user.

## Description

### FIELD

This disclosure regards ergonomic tools for the expansion of pipe and tubing, as well as methods of design, use and operation relating thereto.

### BACKGROUND

Polymer pipe is popular for use as pipes in plumbing in residential home and commercial building construction due to the rising cost of copper pipe. One of the more common types of polymer pipe is made from cross-linked polyethylene, which is commonly known as "PEX". Polymer pipe is connected to form a joint by expanding the mouth at the end of a pipe, thus allowing the expanded end of the pipe to slip over the outer diameter of an end of an adjacent pipe forming the joint. The pipe can be secured at the joint by crimping or otherwise securing the expanded end of the pipe against the outer surface of the end of the adjacent pipe which is overlapped by the inner surface of the expanded pipe mouth. A typical building will require many joints. Thus, installation of the plumbing involves expanding the mouths of numerous pipes and tubes. There is a strong and long-felt need for an efficient and ergonomic tool for expanding the ends of pipes.

### SUMMARY

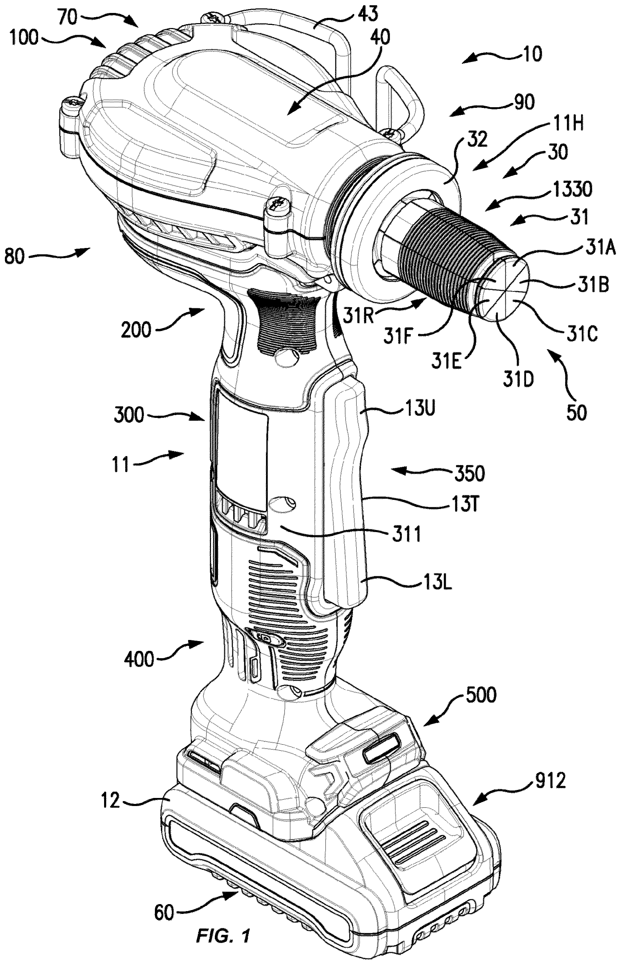

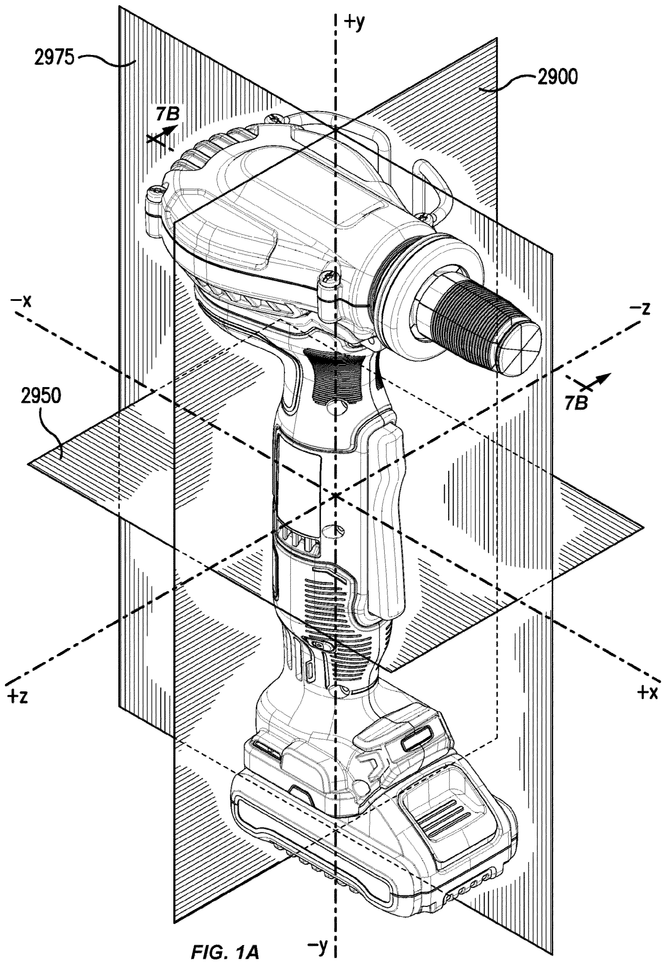

The PEX expander is a significant advance in ergonomic technology. The PEX expander disclosed herein is an expanding tool **10** (*e.g.* FIG. 1) for widening the diameter of pipe ends. The expanding tool **10** achieves an expansion force of a plurality of jaws **31** for expanding pipes having nominal pipe diameters in a range from 3/8 in in to 3.0 in, or 0.5 in to 2 in, or 3/8 in to 6.0 in, *e.g*. nominal pipe diameters (aka "pipe sizes") of 0.5 in, 0.75 in, 1.0 in, 1.25 in, 1.5 in, 2.0 in, 2.5 in, 3.0 in, 4.0 in, 4.5 in and 5.0 in.

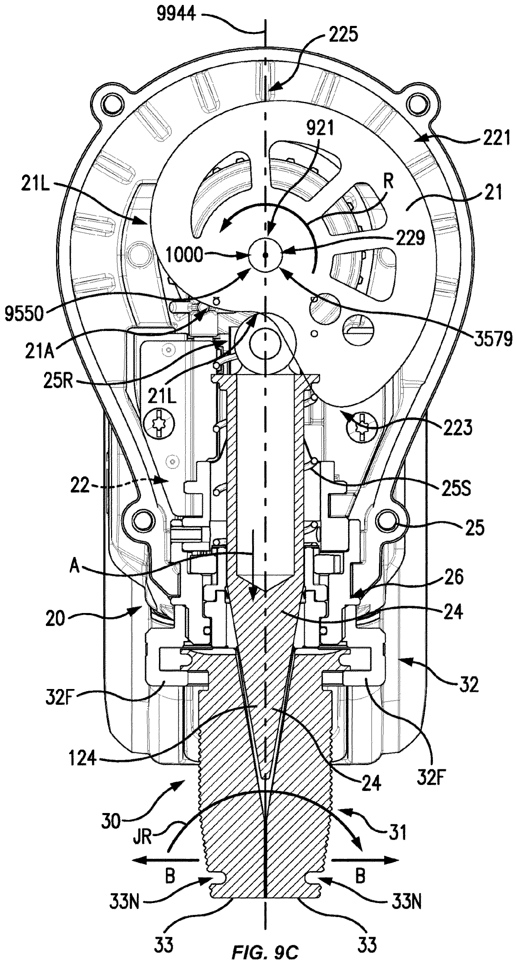

In its many and varied embodiments, the present disclosure relates to expansion tools to expand the end portions of pipe, *e.g*. cross-linked polyethylene (commonly known as "PEX") pipe. Herein, embodiments of such tools are referred to in nonlimiting example as expanding tools, for expanding the end portions of pipe, *e.g.* an expanding tool **10.** In embodiments, the expanding tool **10** can utilize an expansion head **1330,** which can have a number of segments such as a plurality of jaws **31** (herein also as "jaws" and jaws 31"), as well as an auto-rotation feature (FIG. 9C). In an embodiment, the expansion head **1330** can be a multi-segmented expansion head and can have a plurality of jaws **31.**

As disclosed herein in its several and varied embodiments and shown in FIGS. 1-16, the expanding tool **10,** achieves a strong expansive force, ergonomic weight distribution, comfortable gripping for a user, as well as a tool center of gravity containment which significantly advances tools and methods for expanding pipe and tubing.

### Summary Of The Tool

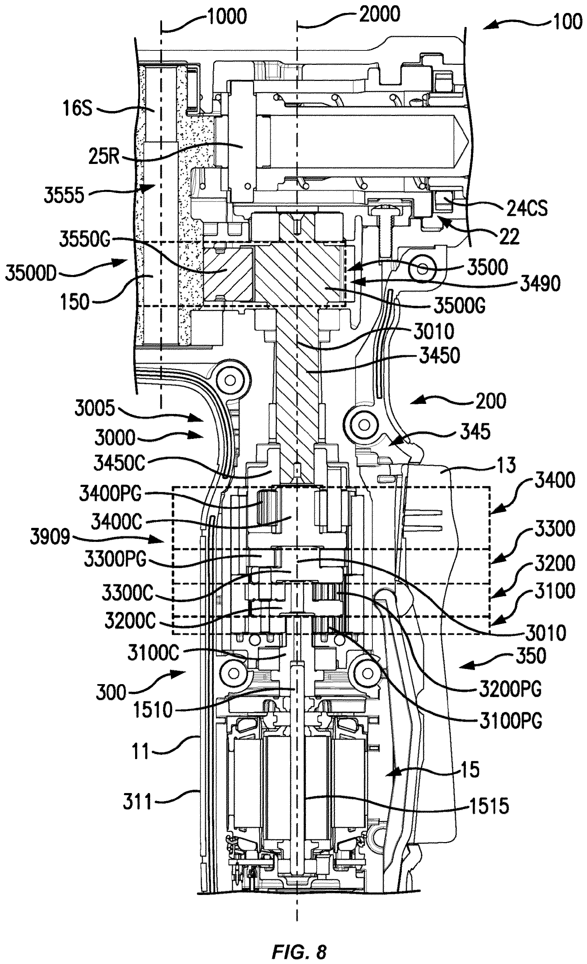

In an embodiment, the expanding tool **10** achieves an expansion force through a motor **15** which drives a five-stage transmission. In an embodiment, the five-stage transmission has a fifth (5^{th}) stage in which a fifth (5^{th}) stage drive gear **3500G** (FIG. 8) which can be configured along a motor centerline **2000** drives a cam spindle drive gear **3550G** which can be offset at a distance from the motor centerline **2000** toward a back end of a head assembly **100.**

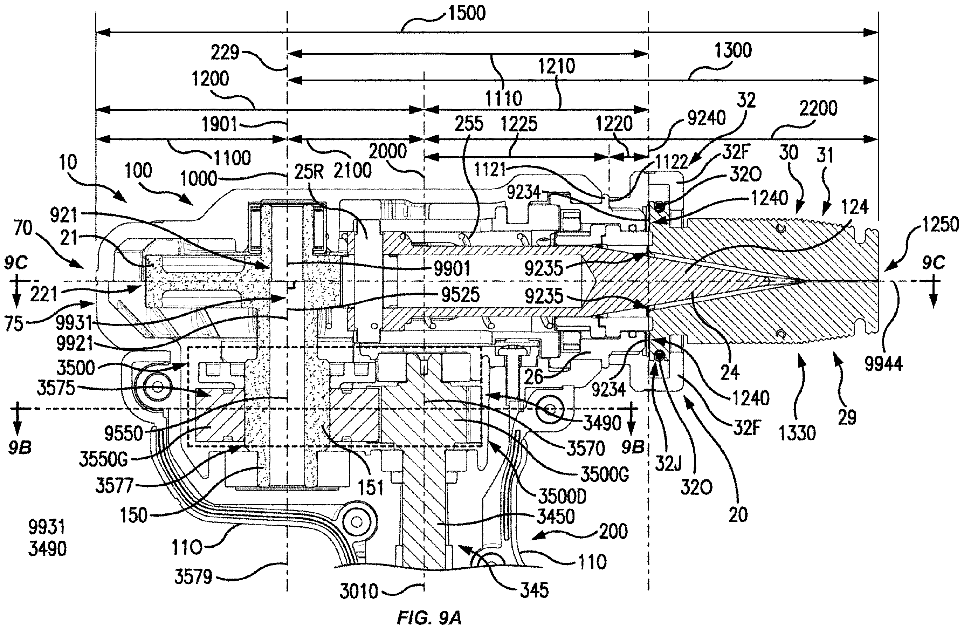

Ergonomically, in an embodiment, the offset of the cam spindle drive gear **3550G** can drive the cam spindle **150** and a cam **21.** The cam **21** which can be selectively driven by the cam spindle **150,** at a cam spindle centerline distance of **2100** from the motor centerline **2000** (FIG. 9A).

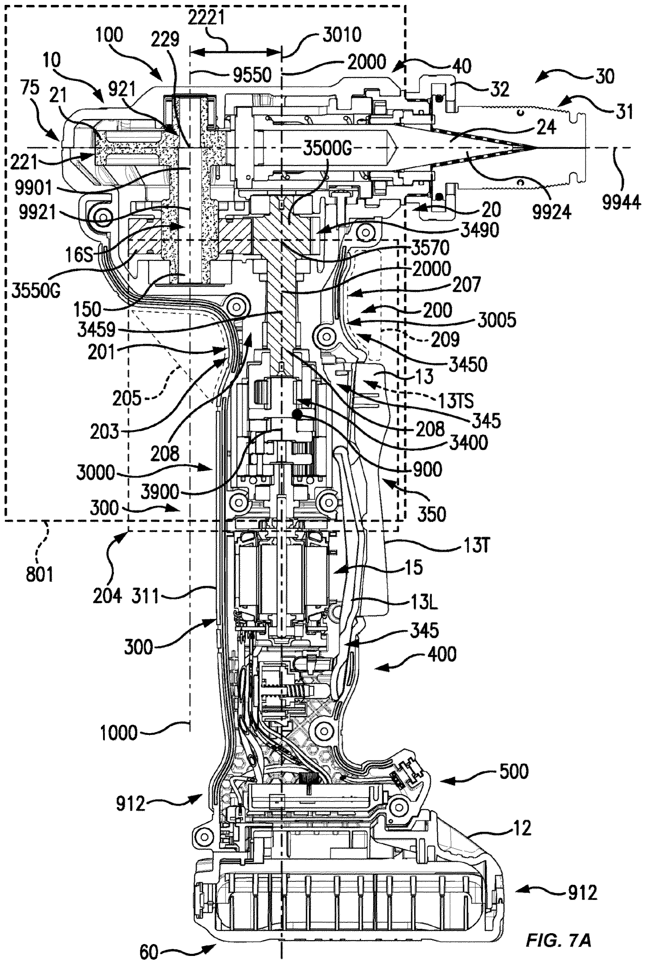

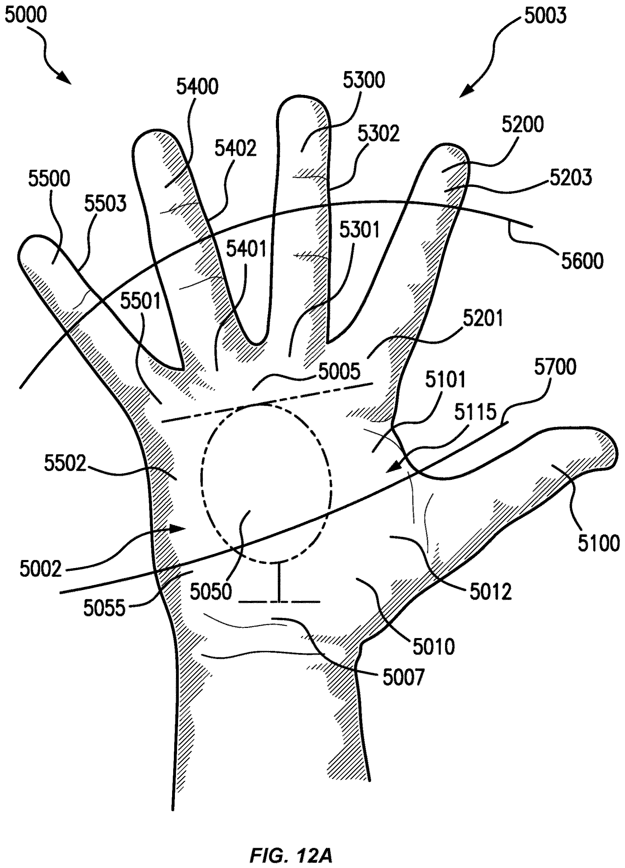

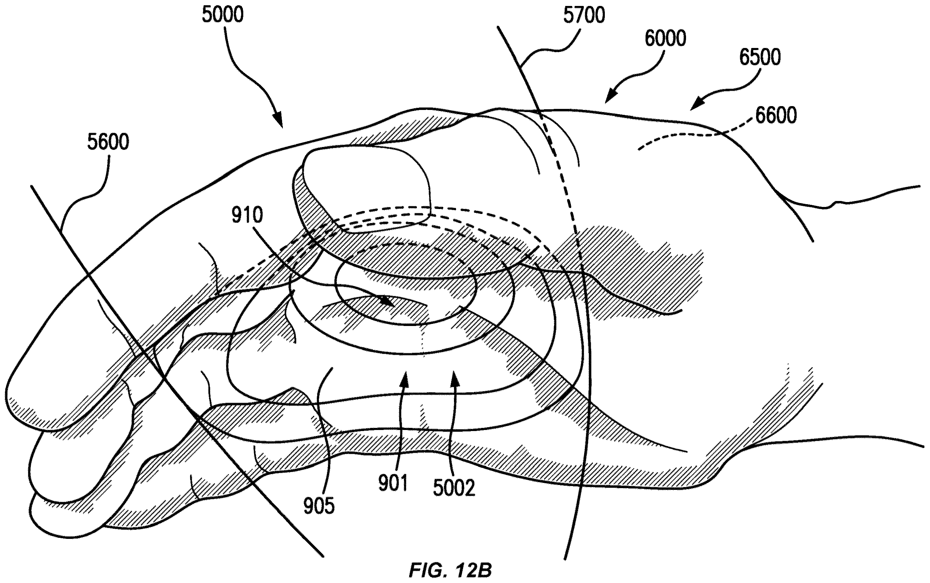

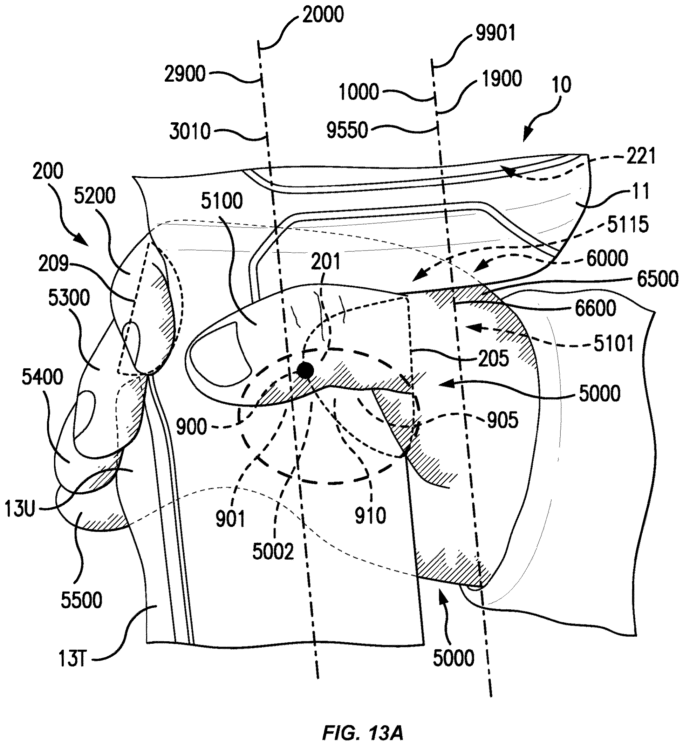

As can be seen in nonlimiting example in FIGS. 7A, 9A, 9C and 12A, in embodiments, the cam **21** can be configured at a cam spindle centerline distance of **2100** from the motor centerline **2000** which distributes the weight of the cam **21,** a wedge **24** and the expansion head **1330** having a plurality of jaws **31** across the tool length **1500.** This configuration achieves a balanced and ergonomic positioning of the cam **21,** the wedge **24** and the expansion head **1330** above an upper grip **200** such that when a user grips the expanding tool **10** by the upper grip **200** (FIG. 12) the cam **21** and the wedge **24** are comfortably configured above the back of the user's hand **5000,** *e.g*. above the dorsal interossei muscles **6500** and/or first (1^{st}) dorsal interosseous muscle **6600** of the user's hand, and the expansion head **1330** can be configured above the user's fingers **5003** (FIG. 13A) as they grip the upper finger grip **207** of the upper grip **200.** In an embodiment, wedge **24** can have a cone **124.**

The expanding tool **10** achieves an exceptional ergonomic distribution of weight across the tool length **1500.** The expanding tool **10** shown in FIGS. 1-10A and 12-16, distributes weight comfortably across the user's hand **5000,** and across the back of the user's hand **6000,** when the user grips the upper grip **200.** Further, an ergonomic and comfortable weight distribution is also achieved across the back of the user's hand **6000,** when the user grips the lower grip **400.**

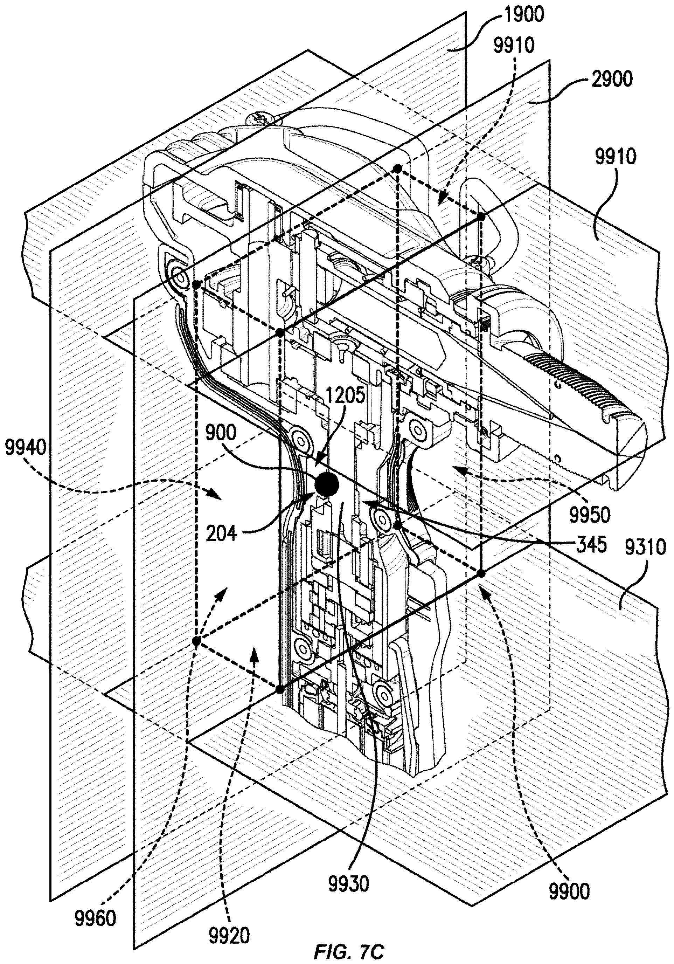

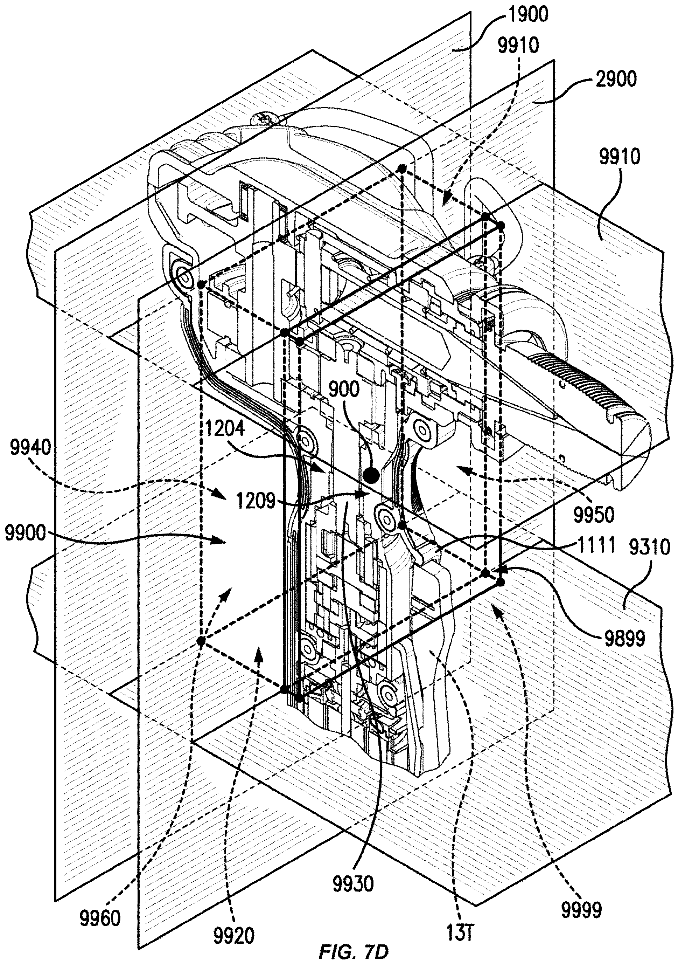

In an embodiment, a cam **21** configuration which is offset by a cam spindle centerline distance of **2100** from the motor centerline **2000** achieves a tool center of gravity **900** (herein also as **"CG 900")** which is bounded within the handle interior volume **345,** *e.g*. within the upper grip interior volume **1204** (FIG. 7D) and/or within the upper palm grip interior volume **1205** (FIG. 7C) and/or within upper finger grip interior volume **1209.**

The expanding tool **10** can have a power cord **9121** (not shown), or can be a cordless tool. In cordless tool embodiments, the cam **21** configuration which can be offset by a cam spindle centerline distance of **2100** from the motor centerline **2000** can achieve a tool center of gravity **900** which is bounded within the handle interior volume **345** proximate to at least one of the driveshaft **3450,** the transmission **3000** and the motor **15.** The location of the tool center of gravity **900** can depend upon the size of the battery pack **600** attached, *e.g*. in a range of from 2 Ah to 50 Ah. In embodiments, depending upon the size of the battery pack **600,** the tool center of gravity **900** can be within the handle interior volume **345** proximate to at least one of the transmission **3000's** fifth (5) stage **3500,** fourth (4^{th}) stage **3400,** third (3^{rd}) stage, second (2^{nd}) stage **3200** and first (1^{st}) stage **3100.**

As shown in FIG. 7C, in embodiments, the tool center of gravity **900** can be bounded between a cam spindle centerline plane **1900** and a motor centerline plane **2900** within a CG containment space **9900.** As shown in nonlimiting example in FIG. 7C, **CG 900** can be configured and contained within the CG containment space **9900,** within the handle interior volume **345,** within the upper grip volume **204,** and also within upper palm grip volume **205.**

In an embodiment, the weight of the tool **10** can be balanced on either side of the motor centerline plane **2900** which can place the center of gravity on the the motor centerline plane **2900.**

In other embodiments, as shown in FIG. 7D, **CG 900** is configured within an extended CG containment space **9999** which can be bounded between a cam spindle centerline plane **1900** and a housing front side **1111.** As shown in nonlimiting example in FIG. 7D, **CG 900** is configured within the extended CG containment space **9999,** within the handle interior volume **345,** within upper grip interior volume **1204,** and within the upper finger grip interior volume **1209.**

In an embodiment, the expanding tool **10** for expanding the end of a pipe, can have a head assembly **100** which can have an expansion head **1330** having a plurality of jaws **31** having a closed position and an open position; a motor **15** having a motor centerline **2000** within a grip volume **400;** a cam spindle **150** having a cam spindle centerline **1000** configured at a cam spindle centerline distance **2100** from the motor centerline **2000;** and a transmission **3000** driven by the motor **15** which selectively drives the cam spindle **150.**

In an embodiment, the expanding tool **10** can have an upper palm grip volume **205** configured between a portion of a cam spindle **150** and a portion of the motor **15.**

In an embodiment, the expanding tool **10** can have an upper grip **200.** In an embodiment, the expanding tool **10** can have a lower grip **400.** In an embodiment, the expanding tool **10** can have both an upper grip **200** and a lower grip **400.**

In an embodiment, the expanding tool **10** can have an upper grip **200** having an upper palm grip volume **205** configured between a portion of a cam spindle **150** and a portion of the motor **15.** In an embodiment, the expanding tool **10** can have a lower grip **400** having a lower palm grip volume **405** configured between a portion of a cam spindle **150** and a portion of the motor **15.** In an embodiment, the cam **221** can be drive by the cam spindle **150** and a wedge **24** can be configured to drive the plurality of jaws **31.**

In an embodiment, the expanding tool **10** can have an upper palm grip **205** volume configured between a portion of a cam spindle **150** and a portion of the transmission **3000.** In an embodiment, the expanding tool **10** can have an upper grip **200** having an upper palm grip volume **205** configured between a portion of a cam spindle **150** and a portion of the transmission **3000.** In an embodiment, the expanding tool **10** can have a grip configured such that the cam spindle centerline **1000** passes through a portion of a back of hand of a user's hand **6000** when a user grips the grip.

In an embodiment, the expanding tool **10** can have an upper grip **200** and/or a lower grip **400** configured such that the cam spindle centerline **1000** passes through a portion of an operator's hand **5000,** *e.g*. a back of hand **6000** of an operator's hand **5000,** when the user grips either the upper grip **200,** or the lower grip **400.**

In an embodiment, the expanding tool **10** can have a grip having a maximum length in a range of 40 mm to 60 mm and a grip width maximum diameter in a range of 35 mm to 50 mm.

In an embodiment, the expanding tool **10** can have: a handle **300** portion surrounding the motor **15** at least in part and a cam back end **225** of the cam **221.** In an embodiment, the cam spindle centerline **1000** can be configured between the cam back end **225** and the handle **15** can have a portion which surrounds at least a portion of the motor **15.** In an embodiment, the expanding tool **10** can have a wedge **24** configured to drive the plurality of jaws **31** in which the cam **221** is configured adjacent to the wedge **24,** and in which the motor centerline **2000** passes through at least a portion of the wedge **24.**

In an embodiment, the expanding tool **10** can have a battery **12** which powers at least the motor **15.** In an embodiment, the expanding tool **10** can be a cordless tool. In an embodiment, the expanding tool **10** for expanding the end of a pipe can have a bare tool weight measured without a battery **12** attached and without an expansion head **1330** attached to the expanding tool **10** in a range of 3 lbs to 20 lbs, e.g. 4 lbs, 5 lbs, 10 lbs, 12 lbs, 15 lbs, 16 lbs and 18 lbs.

In an embodiment, the expanding tool **10** for expanding the end of a pipe can have a tool weight measured with a battery **12** attached and with an expansion head **1330** attached to the expanding tool **10** in a range of 3 lbs to 25 lbs, *e.g*. 5 lbs, 10 lbs, 12 lbs, 15 lbs, 16 lbs and 20 lbs.

In an embodiment, the expanding tool **10** for expanding the end of a pipe, can have a cam **221** which drives a wedge **24** configured to selectively drive a plurality of jaws **31** from a closed position to an open position; a motor **15** having a motor centerline **2000** configured within a grip volume **4000;** a cam spindle **150** can have a cam spindle centerline **1000** configured at a cam spindle centerline distance **2100** from the motor centerline **2000;** and a transmission driven by the motor **15** can selectively drive the cam spindle; and the expanding tool **10** can have a tool center of gravity **900** configured between at least a portion of the cam **221** and at least a portion of the motor **15.**

The expanding tool **10** can have a cam spindle centerline plane **1900** parallel to a motor centerline **2000** plane, in which the tool center of gravity **900** can be configured between the spindle centerline plane and the motor centerline **2000** plane.

The expanding tool **10** can have a handle having **311** a handle interior volume **345,** in which the tool center of gravity **900** can be configured within the handle interior volume **345.**

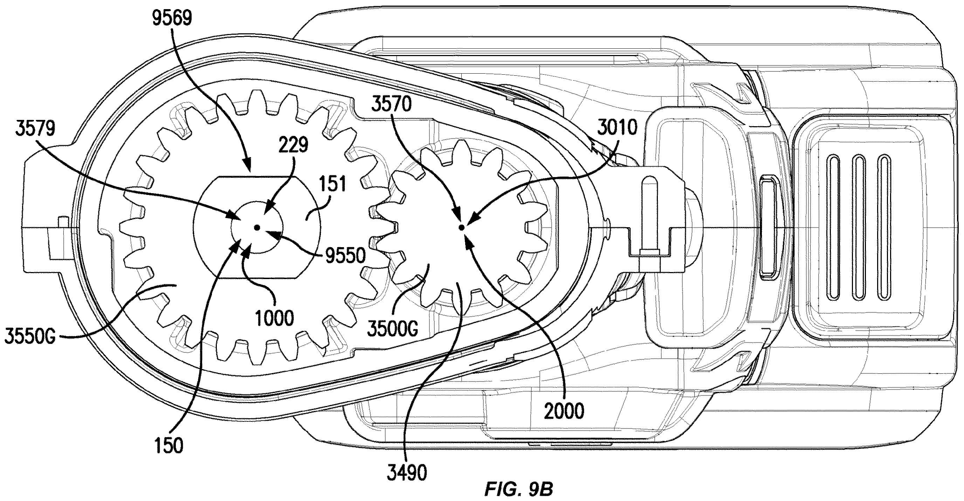

In an embodiment, the transmission **3000** can drive a drive gear **3490** (FIGS 7A, 9A and 9B). The drive gear **3490** can be a gear of any stage of the transmission **3000.** There can be more than one drive gear **3490** in or associated with the transmission **3000.** There can be more than one type of drive gear **3490** in or associated with the transmission **3000,** some can be drive gears driving other gears and/or elements and others can serve a specific purpose. In embodiments, the drive gear **3490** can be a fifth (5^{th}) stage drive gear **3500G** and/or a cam spindle drive gear **3550G** and/or other of a drive gear **3490** configured as part of the transmission **3000** or otherwise receiving and/or transmitting force associated with the operation of the transmission **3000.**

In an embodiment, the expanding tool **10** for expanding the end of a pipe, can have: a plurality of jaws **31** having a closed position and an open position; a motor **15** having a motor centerline **2000;** a transmission selectively driven by the motor **15;** a transmission centerline **3010** aligned with the motor centerline **2000;** a drive gear driven by the transmission; a cam **221** configured to drive a wedge **24** which is configured to drive the jaws **31** from the closed position to the open position; and a cam spindle drive gear **3550G** having a cam spindle drive gear centerline **9550,** in which the drive gear, *e.g*. fifth (5^{th}) stage drive gear **3500G** drives the cam spindle drive gear **3550G,** and in which the cam spindle drive gear **3550G** is located adjacent to the drive gear and the cam spindle centerline **1000** is at a distance from the motor centerline **2000.**

In an embodiment, the expanding tool **10** can have the cam **221** at least in part configured above the cam spindle drive gear **3550G.** In an embodiment, the expanding tool **10** the cam **221** can be driven by the cam spindle drive gear **3550G.** In an embodiment, the expanding tool **10** can have an upper grip **200** at least in part configured between a portion of a cam spindle **150** and a portion of the motor **15.** In an embodiment, the expanding tool **10** can have an upper grip **200** at least in part configured between a portion of the cam spindle **150** and a portion of the transmission **3000.** In an embodiment, the expanding tool **10** can have a wedge **24** having a portion through which the motor centerline **2000** passes.

In an embodiment, the expanding tool **10** can have a cam **221** having a cam opening **921;** a cam spindle drive gear **3550G** having a cam spindle drive gear opening **3577;** and a cam spindle **150,** in which the cam spindle **150** is configured to be at least in part surrounded by at least a portion of the cam opening **921** and at least a portion of the cam spindle drive gear opening **3577.**

In an embodiment, the expanding tool **10** can have a cam **221** having a cam opening **921;** a cam spindle drive gear **3550G** having a cam spindle drive gear opening **3577;** and a cam spindle **150,** in which the cam spindle **150** is inserted at least in part into the cam opening **921** and at least in part into the cam spindle drive gear opening **3577.**

In an embodiment, an expanding tool **10** can have: a head assembly **100** which can have an expansion head **1330** having a plurality of jaws **31** having a closed position and an open position; a motor **15** having a motor centerline **2000;** a cam spindle **150** having a cam spindle centerline **1000,** the cam spindle centerline **1000** at distance from the motor centerline **2000;** and a transmission **3000** driven by the motor **15** selectively driving the cam spindle **150** which selectively drives the plurality of jaws **31** from a closed position to an open position; and a tool center of gravity **900** configured between the cam spindle **150** and the motor **15.**

In an embodiment, the expanding tool **10** can have: a head assembly **100** which can have an expansion head **1330** having a plurality of jaws **31** having a closed position and an open position; a motor **15** having a motor centerline **2000;** a cam having a cam opening centerline at distance from the motor centerline **2000;** and a transmission **3000** driven by the motor **15** selectively driving the cam spindle **150** which selectively drives the plurality of jaws **31** from a closed position to an open position; and a tool center of gravity **900** configured between the cam and the motor **15.**

In embodiments, the head assembly **100** can have a plurality of jaws **31** which function to expand the end of a pipe, but which are not configured as part of an expansion head **1330.**

In an embodiment, the expanding tool **10** can have a trigger **13T** configured adjacent to the tool center of gravity **900.**

In an embodiment, the expanding tool **10** can have a tool center of gravity **900** which can be adjacent to a portion of the transmission **3000.** In an embodiment, the expanding tool **10** can have a transmission **3000** which can be a five-stage transmission **3005** and the tool center of gravity **900** can be adjacent to a portion of the five-stage transmission **3005.** In an embodiment, the expanding tool **10** can have a transmission **3000** which has a third stage **3300** and the tool center of gravity **900** can be adjacent to a portion of the third stage of the transmission **3000.** In an embodiment, the expanding tool **10** can have a transmission **3000** which has a fourth stage **3400** and the tool center of gravity **900** can be adjacent to a portion of the fourth stage of the transmission **3000.**

In an embodiment, an expanding tool **10** can have: a head assembly **100** having a plurality of jaws **31** having a closed position and an open position also referred to herein as an "expanded position"; a motor **15** having a motor centerline **2000;** a cam spindle **150** having a cam spindle centerline **1000,** the cam spindle centerline **1000** at distance from the motor centerline **2000;** and a transmission **3000** having a cam spindle drive stage **3500D** having a cam spindle drive gear configured to selectively drive a rotation of the cam spindle **150.**

In an embodiment, the expanding tool **10** can have a gear adjacent to, *e.g.* at least in part horizontally adjacent to and/or or horizontally next to, and making external contact with the cam spindle drive gear **3550G** to drive a rotation of the cam spindle drive gear **3550G** when driven by the motor **15.**

In an embodiment, the expanding tool **10** can have a radial cam **21** having a radial cam spindle opening centerline **9921,** the radial cam spindle opening centerline **9921** a distance from the motor centerline **2000.** In an embodiment, the expanding tool **10** can have a radial cam **21** having a radial cam spindle opening centerline **9921,** the radial cam spindle opening centerline **9921** configured coaxially with the cam spindle centerline **1000.**

In an embodiment, the expanding tool **10** can have a radial cam **21** having a radial cam spindle opening centerline **9921,** the radial cam spindle opening centerline **9921** can be configured to vertically extend at a distance from and/or adjacent to the back side of the handle housing **311** and/or the tool foot assembly **500** and/or battery pack **12.** In an embodiment, the radial cam spindle opening centerline **9921** can be configured to vertically extend though at least a portion of the upper grip volume **204** and/or upper grip **200.**

In an embodiment, the expanding tool **10** can have: a head assembly **100** having a plurality of jaws **31** having a closed position and an open position (aka "expanded position"); a motor **15** having a motor centerline **2000;** a cam spindle **150** having a cam spindle centerline **1000,** the cam spindle centerline **1000** at distance from the motor centerline **2000;** and a transmission **3000** having a cam spindle drive stage having a cam spindle drive gear configured to selectively drive a rotation of the cam spindle **150;** and the cam spindle drive gear surrounding at least a portion of the cam spindle **150.**

In an embodiment, the expanding tool **10** can have a motor centerline **2000** configured perpendicular to the cam spindle centerline **1000.** In an embodiment, the expanding tool **10** can have a motor centerline **2000** configured parallel to the cam spindle centerline **1000.** In an embodiment, the expanding tool **10** can have a motor centerline **2000** which is not perpendicular to the cam spindle centerline **1000.**

In an embodiment, the expanding tool **10** can have: a head assembly **100** having a plurality of jaws **31** having a closed position and an open position; a motor **15** having a motor centerline **2000;** a cam having a cam opening centerline at distance from the motor centerline **2000;** and a transmission **3000** driven by the motor **15** selectively driving the cam spindle **150** which selectively drives the plurality of jaws **31** from a closed position to an open position; and a tool center of gravity **900** configured between the cam and the motor **15.**

In an embodiment, the expanding tool **10** can have the cam front end **223** configured between the cam spindle centerline plane **1900** and the motor centerline plane **2900.** In an embodiment, the expanding tool **10** can have the cam front end **223** configured between the cam spindle centerline plane **1900** and the upper palm grip trough **203.**

In an embodiment, the expanding tool **10** can have a cam axis centerline **229** which can be coaxial to a cam spindle centerline **1000** and configured at a distance from a motor centerline **2000.**

In an embodiment, the expanding tool **10** can have: a head assembly **100** having a plurality of jaws **31** having a closed position and an expanded position, the jaws having a jaws back end **1240** and a jaws front end **1250;** a motor **15** having a motor centerline **2000;** a cam spindle **150** having a cam spindle centerline **1000,** the cam spindle centerline **1000** at distance from the motor centerline **2000;** and a transmission **3000** having a cam spindle drive stage having a cam spindle drive gear configured to selectively drive a rotation of the cam spindle **150** to selectively drive the plurality of jaws **31** from a closed position and an expanded position; and an upper grip configured between the motor **15** and the head assembly **100.**

In an embodiment, the expanding tool **10** can have a wedge **24** configured to contact a portion of the plurality of jaws **31** proximate to a jaws back end **1240** contact point when the wedge **24** is moved into contact with the plurality of jaws **31,** and in which the motor centerline **2000** can be configured between the cam spindle centerline **1000** and the initial wedge contact point.

### Summary Of Methods

In an embodiment, a method of expanding a pipe end can have the steps of: providing a head assembly **100** having a plurality of jaws **31** selectively having a closed position and an open position (expanded position); a motor centerline **2000** configured within a grip volume **4000** a motor **15** having a motor centerline **2000** and a motor centerline plane **2900** parallel to a cam spindle centerline **1000;** the cam spindle **150** having a cam spindle centerline **1000,** the cam spindle centerline **1000** at distance from the motor centerline **2000** and a cam spindle centerline plane **1900** parallel to the motor centerline **2000;** a transmission **3000** having a cam spindle drive stage **3500D** having a cam spindle drive gear **3550G** configured to selectively drive a rotation of the cam spindle **150;** and bounding a center of gravity of the tool between the motor centerline plane **2900** and the cam spindle centerline plane **1900.**

In an embodiment, a method of expanding a pipe end can have the steps of: providing a wedge **24** having a wedge centerline **9924,** and bounding a tool center of gravity **900** between the cam spindle centerline **1000** and the motor **15.** In an embodiment, a method of expanding a pipe end can have the steps of: providing a wedge **24** having a wedge centerline **9924** which has a wedge centerline plane **9910** coaxial with the wedge centerline and perpendicular to motor centerline **2000;** and bounding a center of gravity of the tool between the cam spindle centerline plane **1900** and the motor **15.**

In an embodiment, a method of expanding a pipe end can have the steps of: providing a wedge having a wedge centerline which has a wedge centerline plane coaxial with the wedge centerline and perpendicular to motor centerline **2000;** and providing a transmission plane configured perpendicular to motor centerline **2000** between the motor **15** and a portion of the transmission **3000,** and bounding a tool center of gravity **900** between the wedge centerline plane **9910** and the transmission plane **9310.**

### BRIEF DESCRIPTION OF THE DRAWINGS

The present technology in its several aspects and embodiments solves the problems discussed above and significantly advances the technology of expanding tools for widening pipe ends with ergonomic solutions which benefit operators of the tool. The present technology can become more fully understood from the detailed description and the accompanying drawings, wherein:
FIG. 1 is a first perspective view of the expanding tool;
FIG. 1A is a perspective view of the expanding tool showing axis planes;
FIG. 2 is a second perspective view of the expanding tool;
FIG. 3A is a front-side view of the expanding tool;
FIG. 3B is a front-side view of the expanding tool showing a variety of tool center of gravity locations;
FIG. 4 is a front view cross section of the expanding tool taken at the motor centerline;
FIG. 5 is a back-side view of the expanding tool;
FIG. 6A is a right-side view of the expanding tool;
FIG. 6B is a right-side view of the expanding tool showing a variety of tool center of gravity locations;
FIG. 7A is a right-side cross section of the expanding tool taken at the motor centerline of FIG. 3A;
FIG. 7B is the right-side cross section of 7A showing a number of planes;
FIG. 7C is the right-side cross section of 7B showing a tool center of gravity containment space having a CG front boundary coplanar to the motor centerline plane;
FIG. 7D is the right-side cross section of 7B showing a tool center of gravity containment space having a CG front boundary configured between the motor centerline plane and the trigger;
FIG. 8 is a detail cross sectional view from the right-side of a portion of the transmission taken at the motor centerline along the length centerline plane;
FIG. 9A is a detail cross sectional view from the right-side of the head assembly;
FIG. 9B is a top view gear case cross section taken across the 5^{th} stage transmission of FIG. 9A;
FIG. 9C is a top side view of a cross section of the expanding tool taken through the wedge centerline of FIG. 9A;
FIG. 9D is a detail view of the radial cam;
FIG. 9E is a first (1^{st}) detail view of the jaws rotating/expanding mechanism;
FIG. 9F is a second (2^{nd}) detail view showing a shaft which drives a gear ring;
FIG. 9G is a third (3^{rd}) detail view showing a clutch ring;
FIG. 9H is a detail view of an expansion head having the plurality of jaws in a closed configuration;
FIG. 9I is a detail view of an expansion head having the plurality of jaws in a half-open (50% open) configuration;
FIG. 9J is a detail view of an expansion head having the plurality of jaws in a fully-open (100% open) position;
FIG. 10A is left-side view of the expanding tool showing a variety of tool center of gravity locations;
FIG. 10B is left-side view of the expanding tool showing a variety of tool center of gravity locations in relation to the upper grip volume and the lower grip volume;
FIG. 10C is a detail cross section of the handle taken from the left-side through a portion of the upper grip of FIG. 10A;
FIG. 10D showing a variety of circumferences and contour curves;
FIG. 10E shoes geometric relationships of a cross section of the handle taken from the left-side through a portion of the upper grip;
FIG. 11 expanding tool center of gravity locations for the bare tool without an expansion head and without a battery;
FIG. 12A shows a palm side view of a typical human right hand and its various regions;
FIG.12B shows a perspective view of a typical human right hand and its various regions;
FIG. 13A shows a left-side view of a user's right hand gripping the expanding tool upper grip and upper trigger having a tool center of gravity between the cam spindle centerline and the motor centerline;
FIG. 13B shows a left-side view of a user's right hand gripping the expanding tool's upper grip and upper trigger having a tool center of gravity between the cam spindle centerline and the trigger;
FIG. 13C shows a detail perspective view of the upper grip volume and the lower grip volume;
FIG. 14 shows a left-side view of a user's right hand gripping the expanding tool's lower grip and lower trigger;
FIG. 15A is a top side view of the expanding tool;
FIG. 15B is a top side view of the expanding tool showing a variety of tool center of gravity locations; and
FIG. 16 is a bottom side view of the expanding tool.

Herein, like reference numbers in one figure refer to like reference numbers in another figure.

### DETAILED DESCRIPTION

### Overview

The expanding tool **10** in its many and varied embodiments configures and/or bounds the tool center of gravity **900** within X, Y, Z dimensional boundaries and achieves significant ergonomic advantages. The tool center of gravity **900** can be positioned at locations along the X dimension, horizontally (-X, +X), within, or proximate to, the tool handle **300** when utilized with selected battery **12** and expansion heads. The battery **12** and expansion heads can be chosen from a variety of options for battery type **12** and expansion head **1330** types. The tool center of gravity **900** can be configured along the Y dimension, vertically (-Y, +Y), to locations between the head assembly **100** and the foot assembly **500** when utilized with a selected battery **12** and expansion head **1330.** The tool center of gravity **900** can be configured to locations along the Z dimension, horizontally (-Z, +Z), within, or proximate to, the tool handle **300** when utilized with a selected battery **12** and expansion head **1330,** each chosen from a variety of options of battery and expansion head types.

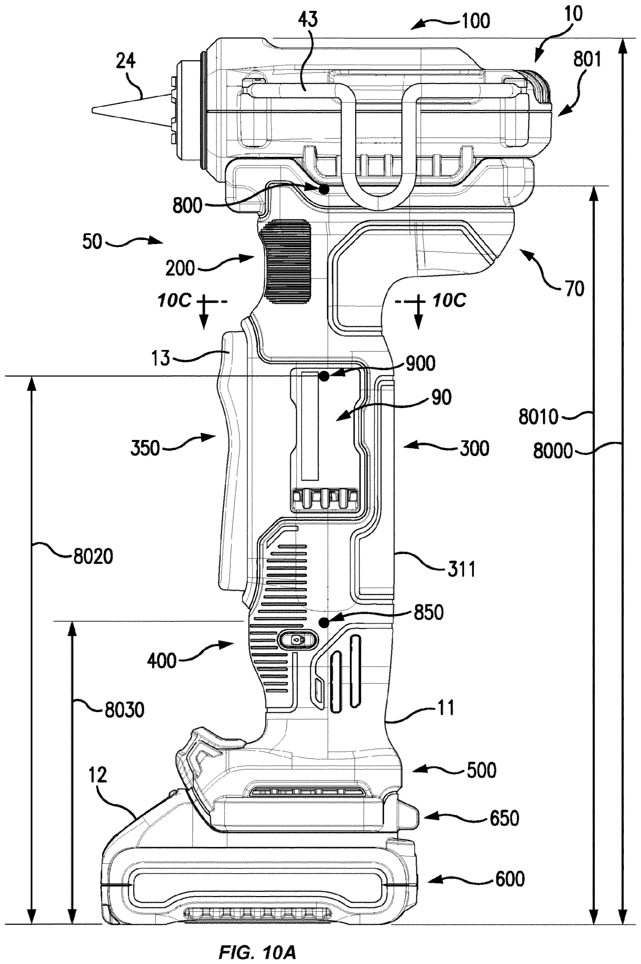

FIG. 1 is a first perspective view of the expanding tool **10** in a vertical orientation having a head assembly **100,** a handle **300** having an upper grip **200,** a lower grip **400** and a power tool battery pack **12.** In nonlimiting example, battery pack **12** can be a battery pack **600** (Fig. 10A).

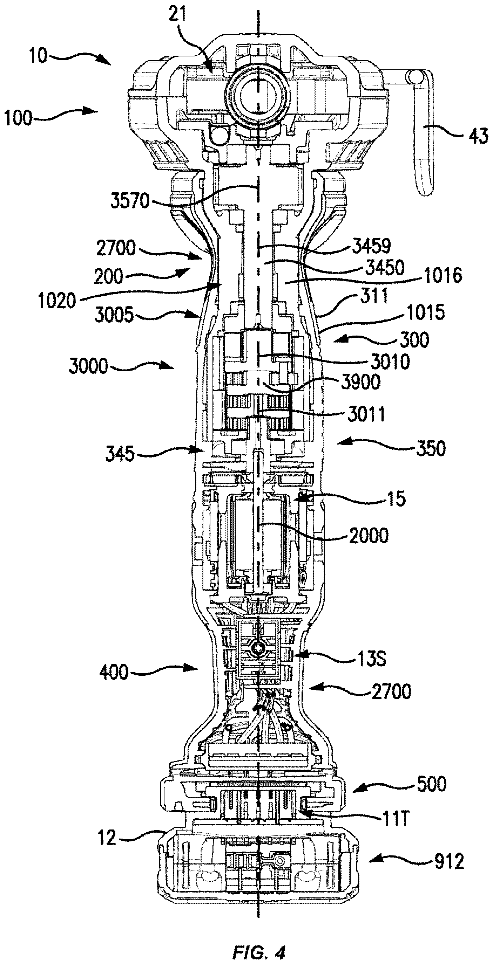

FIG. 1 shows the expanding tool **10** having a housing **11,** preferably including a handle **300,** a handle housing **311,** a jaw assembly **30** disposed on housing **11,** a jaws rotating/expanding mechanism **20** (FIG. 7A) disposed within housing **11,** and a motor **15** (FIG. 4) for driving the jaws rotating/expanding mechanism **20.**

A power tool battery pack **12** can be attached to housing **11** and electrically connected to the expanding tool **10** in order to power motor **15.** In embodiments, the battery pack **12** can also power tool electronics. The power tool battery pack **12** as shown in FIG. 1 can be electrically connected to tool terminals **11T** (FIG. 4), and in turn connected to switch **13S** (FIG. 4).

In an embodiment, housing **11** can be made of a polymer, plastic or high-impact plastic, such as in nonlimiting example polybutylene terephthalate (PBT). In an embodiment, housing **11** can be made in part or in whole from a metal, *e.g.* such as aluminum, or magnesium, or an alloy, plastic, polymer, or can be 3D-printed. Housing **11** can be overmolded with a rubber-like material **11O** (FIG. 9A) for a better grip experience for an operator of the tool **10.**

Housing **11** can also include a housing portion **11H** for at least partially encasing jaws rotating/expanding mechanism **20.** In an embodiment, housing portion **11H** can be made in part or in whole from a metal, e.g. such as aluminum, or magnesium, or an alloy, or a plastic, or a polymer, or a high-impact plastic. Housing portion **11H** can be the same material as housing **11,** or a different material from housing **11.**

Switch **13S** (FIG. 4) can be activated by a trigger assembly **350** which can have a trigger **13T,** which is movable relative to housing **11.** The motion of trigger **13T** is transferred to activate switch **13S** (FIG. 7A) via a link **13L** (FIG. 7A). A spring **13TS** (FIG. 7A) preferably biases trigger **13T** away from motor centerline **2000** and outwardly from housing **11.**

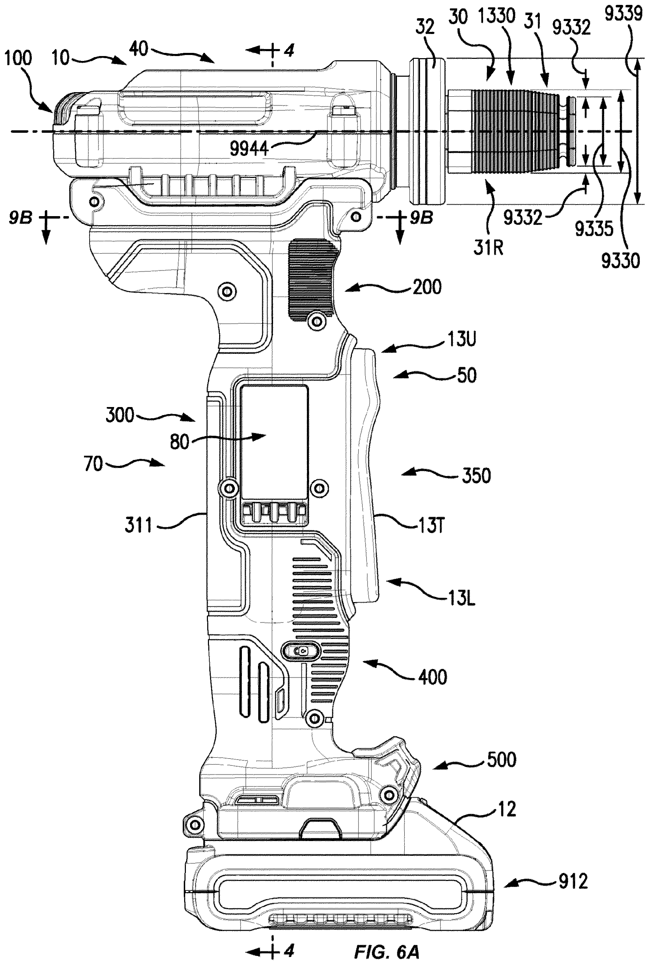

Upon activation of switch **13S,** power from power tool battery pack **12** is transferred to a motor **15.** The motor **15** can drive a transmission **3000** (FIG. 4), which has an output spindle **16S** (FIG. 8), which in an embodiment can be a cam spindle **150** (FIG. 7A). In an embodiment, the trigger **13T** can have a portion which can be an upper trigger **13U** (FIG. 6A) and a portion which can be a lower trigger **13L.**

### Definitions

### Pipe, Tube & Hose

In addition to its ordinary and customary meaning, the term "pipe" herein means a tube or conduit for conducting products and/or physical materials which expressly includes in nonlimiting example a liquid, a gas, a plurality of pellets, a finely divided solid, a powder and/or other products. The term "pipe" also encompasses a meaning of a hollow tube with a cross section for conveyance of products. Herein, the material of construction of a "pipe" is to be broadly construed and expressly includes in non-limiting example polymers, plastics, metals, alloys and other materials. The term "pipe" expressly includes cross-linked polyethylene ("PEX") pipe. PEX pipe is a common term for cross-linked polyethylene pipe, which is also known as cross-linked polyethylene tube, PEX tube, or PEX tubing.

Herein the terms "pipe", "piping", "tube", "tubing" and "hose" are used synonymously.

In addition to its ordinary and customary meaning, the term "mouth" as regards a pipe refers to an open end portion of a pipe. Further, the open end portion includes a length of pipe sufficient to overlap an inserted portion of an expansion head **1330** and/or jaw assembly **30.** In addition to its ordinary and customary meaning, the term "end" used in the context of a pipe end refers to an open end portion of a pipe. Further, the open end portion includes a length of pipe sufficient to overlap an inserted portion of an expansion head **1330** and/or jaw assembly **30.** Herein, the terms "mouth" and "end" are used synonymously in the context of a pipe end which can be expanded by use of the expanding tool **10**

A "pipe" as the term is used herein can have an inner diameter, a nominal diameter and an outer diameter. In operation of the expanding tool **10,** at least a portion of the expansion head **1330** and/or jaw assembly **30** is inserted into the inner diameter of the pipe at the mouth and/or end of the pipe which is to be expanded. The expanding tool **10** can be activated and/or trigger to operate to expand the mouth and/or end of the pipe from having a first inner diameter to achieve a second greater inner diameter. Likewise, the mouth and/or end of the pipe can be expanded from a first nominal diameter to a second greater nominal diameter. Further the expanding tool **10** can operate to expand the mouth and/or end of the pipe from a first outer diameter to a second greater outer diameter.

### Tool

Herein, the term "tool" refers to the expanding tool **10** having a battery attached and having an expansion head **1330** accessory also attached.

### Bare Tool

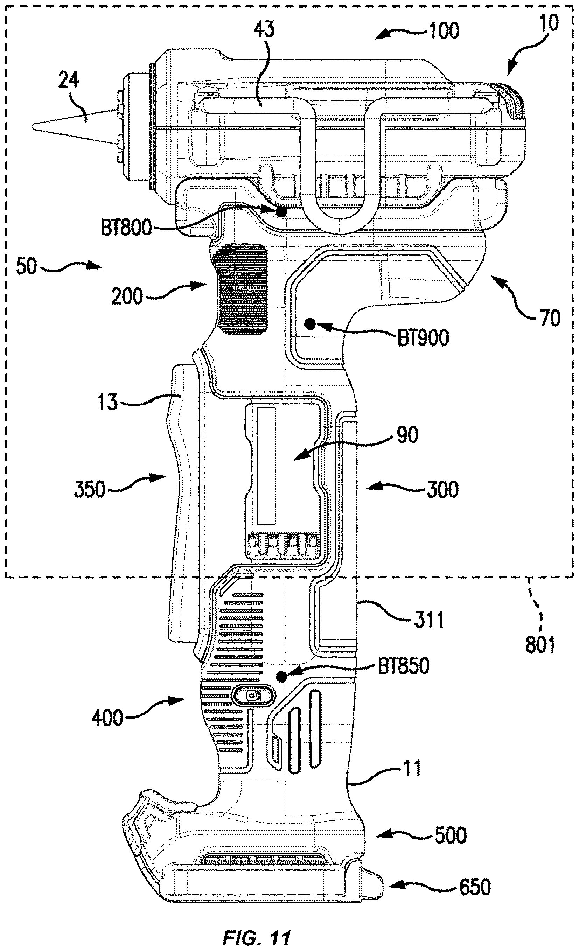

Herein, the term "bare tool" refers to the expanding tool **10** in the state in which a battery is not attached and an expansion head **1330** accessory is also not attached (FIG. 11).

### Handle

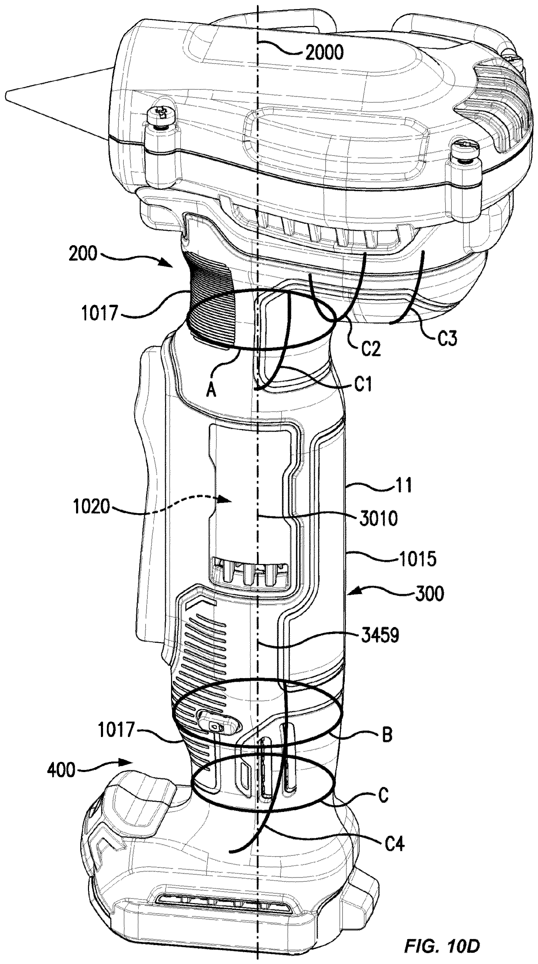

Herein, in addition to its ordinary and customary meaning the term "handle" encompasses at least a portion of a grip **4000** configured to be grasped, gripped and/or held by an operator during operation of the expanding tool **10.** In an embodiment, the term "handle", *e.g.* handle **300,** encompasses the portion of the expanding tool **10** having at least a portion of a grip **2700,** e.g. at least one of an upper grip **200** and a lower grip **400.** Herein, the term "handle" expressly encompasses a handle housing **311** (FIG. 1) configured to be grasped by an operator during operation of the expanding tool **10** and which has at least a portion of a grip **4000.** As shown in nonlimiting example in FIG. 10D, herein the term "handle" expressly encompasses a handle outer surface **1015** which includes at least a portion of a grip surface **1017** (FIG. 10D), as well as a handle inner surface **1016** (FIG. 4), A "handle" as used herein also has a handle inner volume **1020** which is at least in part surrounded by the handle housing **311.**

### Center Of Gravity

Herein, the term "tool center of gravity" **900,** identified by the reference numbers **"900"** and **"CG 900"** in this specification and drawings refers to the center of gravity of the tool in the state of having a battery **12** and/or battery pack **12** attached and having an expansion head **1330** accessory also attached. Herein, center of gravity is abbreviated as "CG".

Herein, the term "bare tool center of gravity", identified by the reference number **"BCG 900"** refers to the center of gravity of the bare tool, not having a battery **12** attached and not having an expansion head **1330** accessory attached.

### Determination Of Center Of Gravity

The determination of the center of gravity of an object is well-known to those skilled in the art to which the subject matter pertains.

As regards the disclosure of this application the method for determination of center of gravity is a suspension method using photo (photographic) superimposition for identifying the center of gravity of an irregularly shaped and/or complex object.

Photo superimposition (also as "photo imposition", or "photoimposition") overlays a number of images of the subject object suspended as respectively hung from various hinging points and having at least one laser plumb beam captured in each overlayed image. The intersection of the laser plumb beams in the composite image identifies the center of gravity.

This suspension and photo superimposition procedure for determining the center of gravity of the expanding tool **10,** the bare tool and the tool having various configurations of battery **12** and nosepiece assembly **1330** attachment(s) can be practiced as follows:
Step 1: Provide a hanging frame from which, or in which, the subject object will be suspended which acts as a solid structure for conducting the center of gravity analysis;
Step 2: Provide a camera upon a flat surface at a distance from the suspended tool which can take an image of the suspended tool transected by the laser beam and where the camera image is taken perpendicularly to the path of the laser beam;
Step 3: Project a laser light vertically plumb across the object in line with the vertical dimension of the hanging frame such that the laser light will transect a suspended tool when suspended in the path of the laser beam (herein also as "laser plumb beam");
Step 4: Suspend the object in the hanging frame from a point of suspension, also called a hinging position, such that the laser plumb beam transects the suspended tool;
Step 5: Take an image of the suspended tool and transecting laser plumb beam as it hangs from a first point of suspension (hinging position);
Step 6: Repeat the procedure of steps 3-5 from different points of suspension (hinging positions) of the tool having the suspended subject of each trial transected by the same vertical laser beam and taking images from the same camera in the same position as for the first suspended image. Thus, multiple photographic images capture the subject suspended tool in different orientations and positions; and
Step 7: Superimpose the images with each image oriented such that the tool's physical portions overlap and the laser beams of the images cross at a point in the overlapped image. Physical features and characteristics of the subject tool and/or reference points can be used to align the multiple images superimposed as a basis for analyzing the crossing and/or intersection(s) of the laser plumb beams. Thus, the resulting images from each trial can be superimposed such that the suspended tool in its chosen configuration are aligned so that its features overlap in the composite image and the respective laser plumb beams cross at a common point and/or location; and
Step 8: Identify the common location and/or point at which the laser beams cross which identifies the center of gravity as represented in that composite view. The composite intersection, i.e. intersection of the laser plumb beams in the composite image, at which the laser plumb beams cross indicates the location of the center of gravity of the suspended object from the perspective of that composite view.

As regards this disclosure, at least two (2) hinging positions can be photographed and superimposed for each center of gravity determination.

This procedure applies to various configurations of the expanding tool, including but not limited to: a bare tool; a bare tool having an attached battery **12** and without a nosepiece assembly **1330;** a bare tool having a nosepiece assembly **1330** and without a battery **12;** and an expanding tool **10** having a battery **12** and a nosepiece assembly **1330.**

The accuracy and confidence of the determination of the center of gravity location are increased by increasing the number of points of suspension tested and increasing the number of photographs having the laser plumb beam shown that are overlapped in the superimposed image.

Additionally, the accuracy of the determination of the center of gravity in X, Y, Z coordinate space is increased by conducting this suspension and photo superimposition method from a number of sides of the subject tool configuration. Thus, multiple composite views can be utilized, combined, modeled, or otherwise analytically and/or mathematically processed, to determine accurate locations of center of gravity in X, Y, Z coordinate space.

Thus, the dimensions of the location of the center of gravity can be determined by analysis of the composite photo superimposed images to a location in one or more dimension of X, Y, Z coordinate space. Additionally, upon determination of the location of the center of gravity by this suspension and photo superimposition method, the relative position of the center of gravity as it relates to one or more feature, aspect and/or part of the tool can also be determined.

Composite image and real tool configuration measurements, as well as scale relationship information between the real tool and the composite image(s) can be used to determine final numeric center of gravity values in relation to tool features and characteristics, or in one or more dimensions in X, Y, Z coordinate space.

The same procedure applies to determination of the center of gravity of the gearcase and motor by using suspension points respectively relevant to the gearcase and motor. This method for determining center of gravity can be used for identifying the center of gravity of individual parts, portions, stack-ups, assemblies, bare tools, tools with and without attachments, and expanding tools having batteries and nosepiece assemblies, as well as other applications.

### Volume

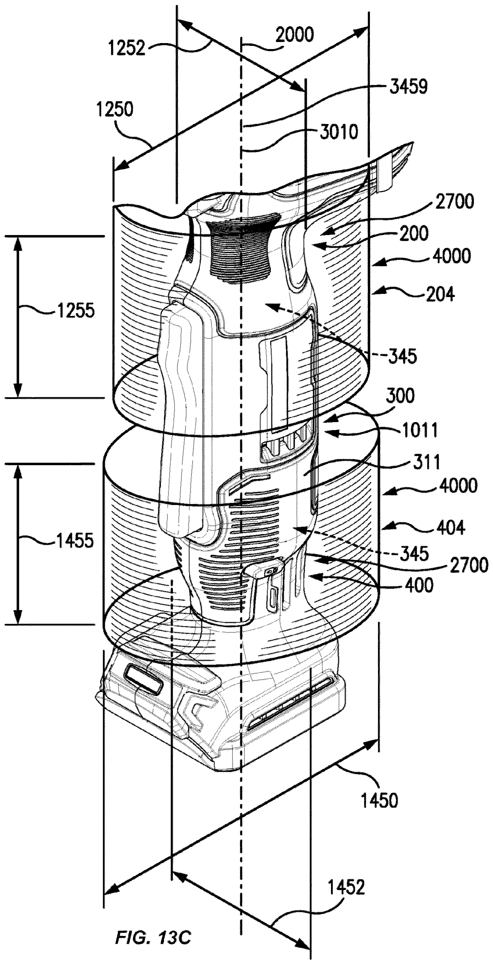

Herein, in addition to its ordinary and customary meaning the term "grip volume" means the amount of space in three dimensions provided to accommodate at least a portion of an operator's hand when grasping a portion of the expanding tool designed for gripping by an operator's hand. As shown in FIG. 13C the term "grip volume" expressly includes a volume of a cylinder, e.g. an ovoid cylinder as shown in FIG. 13C, which has a major axis a minor axis and a height. The examples of each the grip volume **4000** as shown in FIG. 13C is large enough to accommodate and/or contain at least a part of the operator's hand including at lease a portion of the operator's palm and fingers, and can be of greater or smaller volume than shown. As used herein, the term "grip volume" expressly includes the volume encompassing at least a portion of a grip.

Herein, in addition to its ordinary and customary meaning the term "upper grip volume" means the "grip volume" associated with the amount of space in three dimensions provided to accommodate at least a portion of an operator's hand associated with an upper grip, *e.g*. upper grip **200** shown in FIG. 13C. As used herein, the term "upper grip volume" expressly includes the volume encompassing at least a portion of an upper grip.

Herein, in an embodiment, the term "upper grip volume" expressly includes the volumetric space encompassed by gripping area defined by the upper grip girth, *e.g.* a circumference in the range of 115 mm to 210 mm, *e.g*. 125 mm, 145 mm, 160 mm or 180 mm upper grip length and/or height in the range of 25 mm to 120 mm , *e.g.* 25 mm, 50 mm, 80 mm, 100 mm, and upper grip width in the range of 30 mm to 80mm, e.g. 35 mm, 50 mm, 65 mm, 70 mm.

Herein, in addition to its ordinary and customary meaning the term "lower grip volume" means the "grip volume" associated with the amount of space in three dimensions provided to accommodate at least a portion of an operator's hand associated with a lower grip, *e.g.* lower grip **400** shown in FIG. 13C. As used herein, the term "lower grip volume" expressly includes the volume encompassing at least a portion of a lower grip.

Herein, in an embodiment, the term "lower grip volume" expressly includes the volumetric space encompassed by gripping area defined by the lower grip girth having a circumference in a range of 115 mm to 210 mm, e.g. 125 mm, 145 mm, 160 mm, or 180 mm, lower grip length and/or height in a range of 25 mm to 80 mm, e.g. 25 mm, 50 mm, or 80 mm, and lower grip width in a range of 30 mm to 80 mm, e.g. 35 mm, 50 mm, 65 mm, or 70 mm.

### Battery & Power Source

In addition to its ordinary and customary meaning "battery" expressly includes a source of electric power consisting of one or more electrochemical cells with external connections for powering electrical devices. Additionally, the "battery" as used herein expressly includes a variety of batteries having different Ah ratings, battery packs, rechargeable batteries and other batteries sufficient to power the expanding tool **10.**

Herein, the terms "battery" and "battery pack" are used synonymously.

In addition to its ordinary and customary meaning, the term "power source" means any source of electrical current to power and/or operate the expanding tool **10.** The term "power source" expressly includes but is not limited to a power cord, a battery, a battery back, or other source providing current to the expanding tool **10** and/or to motor **15.**

In an embodiment, the expanding tool **10** can have a power cord **9121** which powers at least the motor **15.** In an embodiment, the weight distribution of AC version can be roughly taken as same as the DC version DCE410. In an alternate embodiment, which can be an AC powered version, the tool's weight distribution can be similar to DC embodiments. The AC powered version can use a power cord **9121** (not shown) and DC/AC PCBA (inside of housing) instead of a power tool battery pack **12.** In an embodiment, the expanding tool **10** can have a power cord **9121** which provides power to the expanding tool **10.**

### Ampere-Hour

In addition to its ordinary and customary meaning, ampere-hour abbreviated as "Ah" is the amount of energy charge in a battery and/or battery pack that enables 1 ampere of current to flow for one hour. Additionally, as use herein a value of Ah means the length of time the tool **10** can operate when powered by a given battery **12** and/or battery pack **12.** For example, 5Ah, means that the battery and/or battery pack can provide 1 ampere of current for 5 hours. The tool with 5 Ah battery can run 5 hours under 1 ampere current load, or can run 1 hour with 5 amperes current load. For example, X Ah, means that the battery and/or battery pack can provide 1 ampere of current for X time in hours.

In embodiments, the power tool battery pack **12** used can be selected from a variety of Ah values, *e.g.* a 3 Ah, or 4Ah, or 5 Ah, 10 Ah, 15 Ah, 20 Ah, or 30 Ah power tool battery pack **12** (also herein as "battery pack **12"** and "battery **12**" ) can be used.

### The Term "Within"

In addition to the ordinary and customary meaning of the term "within", to be "within" means to be at least in part surrounded by and/or at least in part encompassed by. Further, as used herein the term "within" means to be at least in part contained, surrounded by and/or encompassed by a bounding feature or characteristic. In nonlimiting example, a tool center of gravity can be "within" housing **11** meaning at least a portion of housing **11** surrounds, contains and/or encompasses the tool center of gravity. Likewise, a tool center of gravity can be "within" handle **300** which means that at least a portion of handle **300** surrounds, contains and/or encompasses the tool center of gravity. In another example, a tool center of gravity can be "within" handle housing **311** meaning at least a portion of handle housing **311** surrounds, contains and/or encompasses the tool center of gravity. Herein, in addition to the ordinary and customary meaning of the term "within", to be within a volume means to be present and or located in at least a part of the space of that volume.

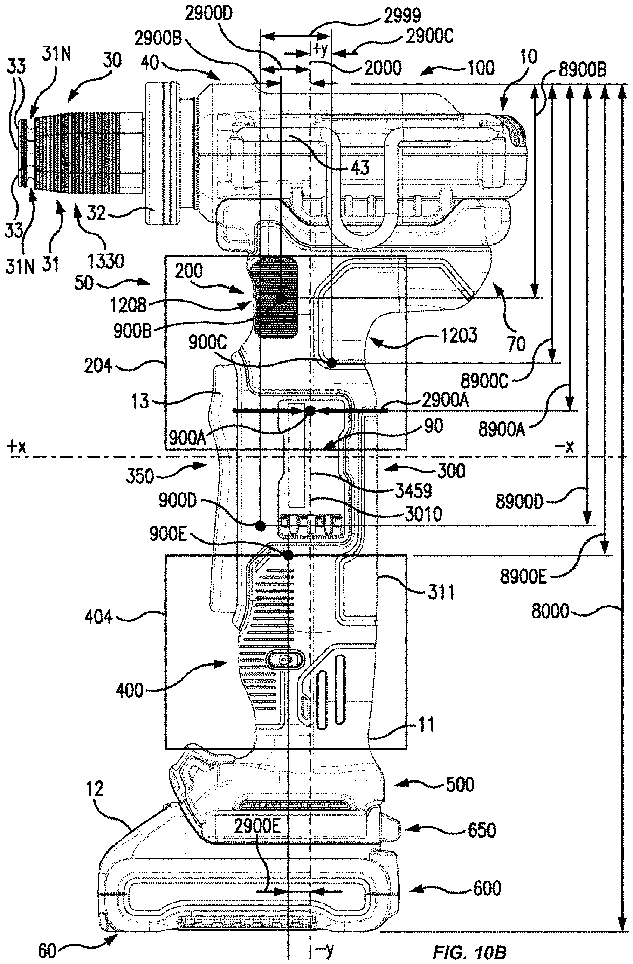

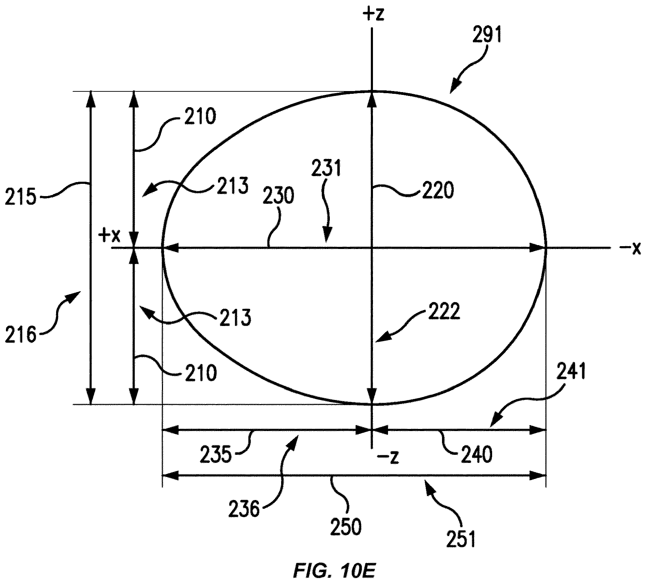

As used herein, in addition to its ordinary and customary meaning, the term "within" in the context of a centerline being "within" a grip volume **4000,** an upper grip volume **204,** a lower grip volume **404,** a grip **2700** (FIGS 4A and 13C), an upper grip **200,** a lower grip **400** means that the centerline has at least a portion along its extended length which passes through, transects and/or is within the geometric volume being referred to. In nonlimiting example see FIGS 10B and 13C. For a two-dimensional cross section, cross-sectional area, shape, boundary, curve, circumference or other two-dimensional boundary, in addition to its ordinary and customary meaning the term "within" in the context of a centerline being "within" means that the centerline has at least a point along its extended length which is inside at least a portion of a boundary of the two-dimensional shape. In nonlimiting example see FIG 10E

In another example, the meaning of "within" an operator's grip means that when an operator grips a portion of the expanding tool **10,** *e.g.* a grip **2700** and/or a tool center of gravity **900** and/or a motor centerline **2000** and/or a transmission centerline **3000** and/or a motor axis **1515** and/or a transmission axis **3011** (FIG. 4) and/or other feature is at least in part surrounded, contained and/or encompassed by a portion of an operator's hand **5000,** e.g. fingers **5003,** palm **5002,** gripping cavity **901**

### Bounding

In addition to its ordinary and customary meaning, as used herein the terms "bound", "bounds", "bounding" and "bounded" with reference *e.g.* to "bounding" a center of gravity, or a center of gravity being "bounded", means that the center of gravity is confined within a finite space regardless of the geometric orientation of the expanding tool **10** in X, Y, Z coordinates. For example, in embodiments the methods disclosed herein achieves "bounding the center of gravity" with a variety of defined limits. In embodiments of the expanding tool **10** as an article, the center of gravity can be "bounded" within limits, or a design can "bound" the center of gravity within limits.

An ergonomic advantage of the expanding tool **10** is that the tool center of gravity **900** (or as **"CG 900")** is bound within geometric and physical limits such that when an operator holding the expanding tool **10** orients the expanding tool **10** in a variety of postures and/or positions within X, Y, Z coordinate space that the center of gravity is contained, herein "bounded" within a defined and/or limited space.

In nonlimiting example, a of gravity **900** can be bounded between a cam spindle centerline plane and a portion of said motor. In another example, a center of gravity **900** can be bound between said wedge centerline plane and a transmission plane. In yet another example, the tool design can result in "bounding" a center of gravity **900** within a volume, *e.g.* a tool center of gravity **900** can be bound within a grip volume **4000** and/or a center of gravity containment space **9900,** and/or an extended center of gravity containment space **9999,** and/or center of gravity containment volume **9899.** In non-limiting example a center of gravity **900** could be bounded in one or more of a CG containment space **9900** (FIGS 7C and 7D), an extended CG containment space **9999** and/or a CG containment volume **9899.** Herein, the abbreviation "CG" is used to mean "center of gravity", *e.g*. "CG containment volume **9899"** means "center of gravity containment volume **9899".** The abbreviation "CG" standing alone in a phrase or drawing means "center of gravity".

### Numeric Values

Numeric values and ranges herein, unless otherwise stated, also are intended to have associated with them a tolerance and to account for variances of design and manufacturing. Thus, a number can include values "about" that number. For example, a value X is also intended to be understood as "about X". Likewise, a range of Y-Z, is also intended to be understood as within a range of from "about Y-about Z". Unless otherwise stated, significant digits disclosed for a number are not intended to make the number an exact limiting value. Variance and tolerance are inherent in mechanical design and the numbers disclosed herein are intended to be construed to allow for such factors (in non-limiting e.g., ± 10 percent of a given value). Likewise, the claims are to be broadly construed in their recitations of numbers and ranges.

### The Expanding Tool

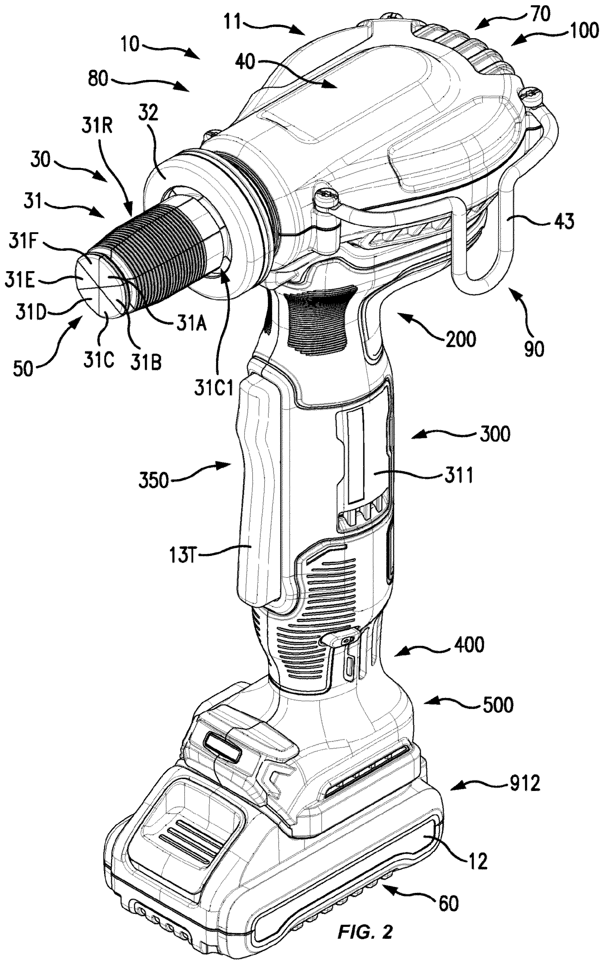

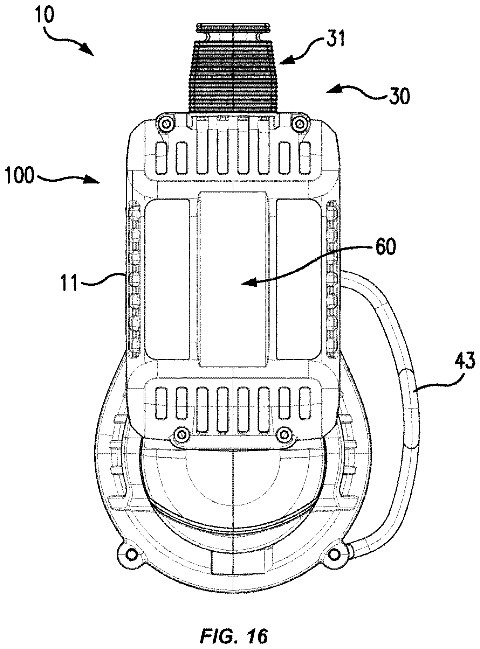

FIG. 1 shows a perspective view of the expanding tool **10** and a variety of its features. FIG. 1 shows perspective views of a right side **80,** a front side **50,** and a top side **40** of the expanding tool **10.** FIG. 1 also identifies a left side **90** a bottom side **60** and a back side **70.** A left side **90** is also shown *e.g*. in FIGS 2 and 10A. The bottom side **60** is shown in FIG. 16. These references to sides are also used herein to refer to orientations of the mechanical features of the tool, *e.g*. the back side **60** of battery **12.** FIG. 1 shows a power source **912** which is a battery **12.**

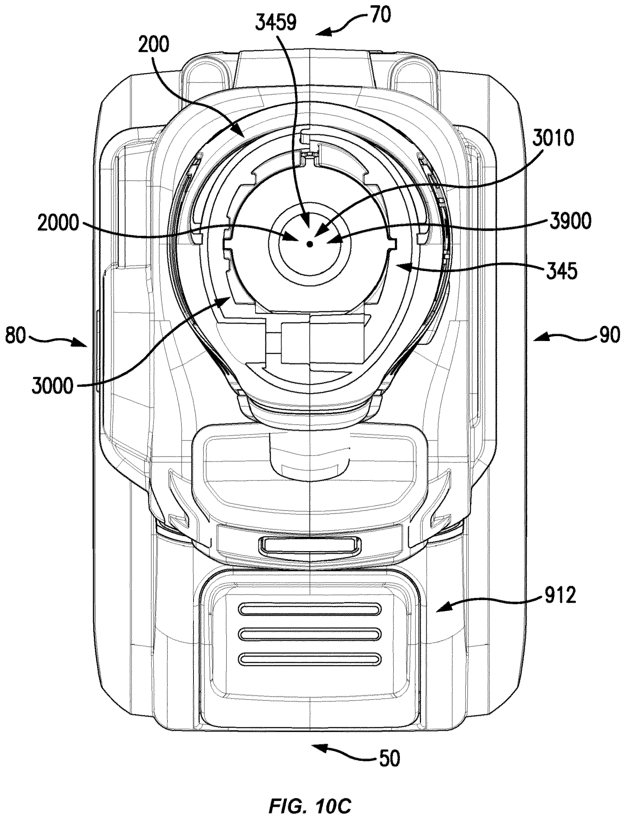

In an embodiment, the expanding tool **10** can have a foot assembly **500** to which a battery **12,** or battery pack **600** (FIG. 10) can physically and electrically connected to the expanding tool **10** to operably provide power and/or electric current to drive the motor **15** (FIG. 4) and other electrical components of the expanding tool **10.**

The expanding tool **10** can have a head assembly **100** and an expansion head **1330** sized for expanding pipes having a range of pipe diameters and pipe sizes. In embodiments, the expanding tool **10** can be used with a variety of types of the expansion head **1330.** The expansion head **1330** chosen for use can be selected from various sizes and types, and which can be driven by a wedge **24** (FIG. 7A). These various types and sizes of the expansion head **1330** can be reversibly attached to the expanding tool **10** and used interchangeably as selected by the operator for compatibility with the pipe size of the pipe to be expanded. An expansion head **1330** can be selected to be compatible for use to expand pipes having nominal pipe diameters in a range from 3/8 in to 6.0 in, or 3/8 in in to 3.0 in, or 0.5 in to 2 in, with nominal pipe sizes *e.g.*: 0.5 in, 0.75 in, 1.0 in, 1.25 in, 1.5 in, 2.0 in, 2.5 in, 3.0 in, 4.0 in, 4.5 in, 5.0 in.

In the embodiment of FIG. 1, the expanding tool **10** is shown in a vertical orientation having an expansion head **1330** which has a jaw assembly **30** having a plurality of jaws **31.** In nonlimiting example, the expansion head **1330** has six (6) jaws **31,** although 1 ... n jaws can be used, where n can be a small or large number, *e.g.* 1-6, or 8, or 10, or greater. FIG. 1 shows the expansion head **1330** having a first jaw **31A,** a second jaw **31B,** a third jaw **31C,** a fourth jaw **31D**, a fifth jaw **31E**, and a sixth jaw **31F**. FIG. 1 also shows optional ribs **31R** of the plurality of jaws **31.** In an embodiment, a cap **32** can be used to cover a portion of the jaw assembly **30.** In an embodiment, two (2) jaws **31** can be used.

FIG. 1 shows a housing **11** having and handle housing **311** of handle **300.** The handle **300** can have an upper grip **200** and a lower grip **400.** FIG. 1 shows a trigger **13T** configured in the handle **300.** In an embodiment, the trigger **13T** can have an upper trigger **13U** and a lower trigger **13L.**

In an embodiment, the expanding tool **10** can have a belt hook **43,** or other means of reversibly securing the expanding tool **10** to a user's clothing, or other item, or equipment.

FIG. 1A is a perspective view of the expanding tool showing centerline planes oriented on a X, Y, Z coordinate system showing X, Y and Z axes.

FIG. 1A shows a motor centerline plane **2900,** a tool centerpoint plane **2950,** and a length centerline plane **2975.** In embodiments, the weight of the expanding tool **10** can be balanced on either side of the motor centerline plane **2900** which can place the center of gravity on the motor centerline plane **2900.** In embodiments, the weight of the expanding tool **10** can be balanced on either side of the centerline plane **2975** which can place the center of gravity on the centerline plane **2975.** In embodiments, the weight of the expanding tool **10** can balanced on either side of the tool centerpoint plane **2950** which can place the center of gravity on the centerline plane **2975.**

FIG. 2 is a second perspective view of the expanding tool **10.**

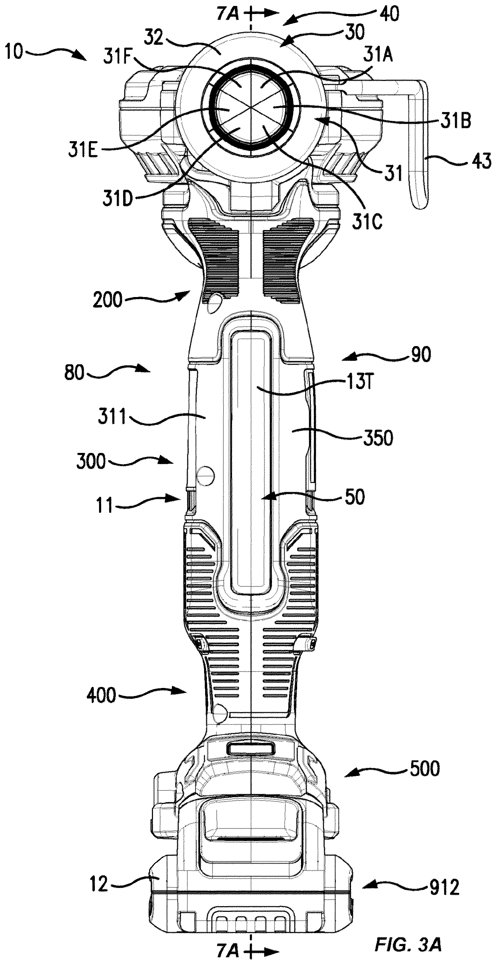

FIG. 3A is a front-side view of the expanding tool **10.**

### Tool Center Of Gravity

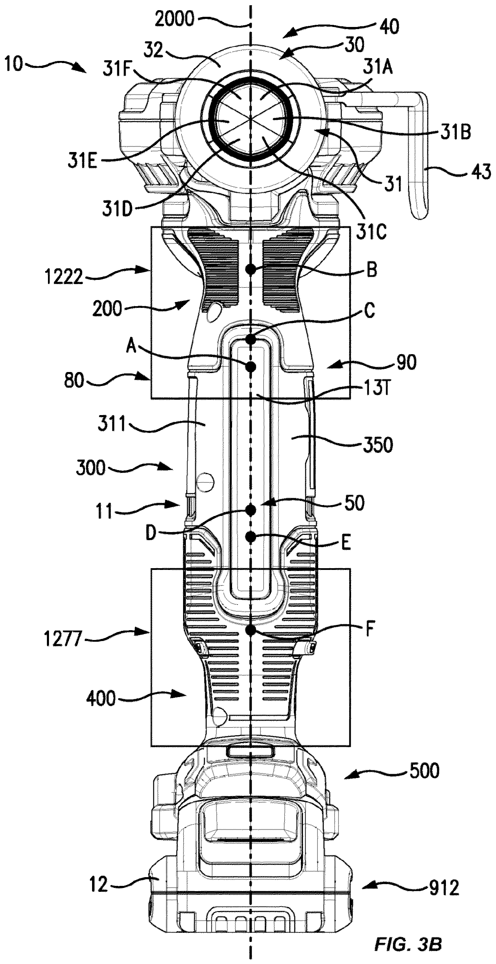

FIG. 3B is a front side **50** view of the expanding tool showing a variety of tool center of gravity **CG 900** locations, respectively marked **A, B, C, D** and **E,** as well as motor center of gravity **MCG 850** marked **F.**

In an embodiment, the design of the expanding tool **10** provides an ergonomic configuration of the cam spindle **150** (FIG. 7A) and upper grip **200,** as well as the upper grip area **1222** and lower grip area **1277.** In an embodiment, the tool center of gravity **CG 900** position can be located within (or inside of) the upper grip **200.** In an embodiment tool center of gravity **CG 900** position can be located within (or inside of) the lower grip **400.**

In an embodiment, the **CG 900** positions of the tool having a battery pack selected from a number of battery packs, *i.e.* 2Ah, 4Ah, 5Ah, 10Ah and 20 Ah, attached and an expansion head **1330** attached can have a tool center of gravity **900** located respectively within and/or proximate to the upper grip **200** and/or an upper gripping area **1222,** or within and/or proximate to the lower grip **400** and/or lower gripping area **1277,** or within and/or proximate to the handle **300** and/or the handle interior volume **345.**

In embodiments, a tool center of gravity **900** with a 10 Ah power tool battery pack **12** can be lower and off to the right as compared to when a 4Ah battery pack 12 is attached.

### Center Of Gravity Examples Of FIG. 3B

In the embodiments shown in FIG. 3B, the tool center of gravity **900** can be located within the upper grip **200** and/or upper grip volume **204** (FIG. 13C), or within the lower grip **400** and/or lower grip volume **404,** depending upon which respective battery **12** and which respective expansion head **1330** are attached.

FIG. 3B shows a tool center of gravity **A** which is an example of a tool center of gravity **CG 900** location with 5Ah power tool battery pack **12.**

Tool center of gravity **B** is an example of a tool center of gravity **CG 900** location with 2Ah power tool battery pack **12** and an expansion head **1330** having 1.5" jaws.

Herein, a recitation of "having X" jaws" where "X" is a dimension, *e.g*. "having 1.5" jaws", means that the expansion head **1330** has a plurality of jaws **31** having closed jaws outer diameter **9330** of "X" dimension, *e.g*. 1.5".

Tool center of gravity **C** is an example of a tool center of gravity **CG 900** location with 2Ah power tool battery pack **12** and an expansion head **1330** having 1" jaws.

Tool center of gravity **D** is an example of a tool center of gravity **CG 900** location with 15Ah power tool battery pack **12** and an expansion head **1330** having 1.5" jaws.

Tool center of gravity **E** is an example of a tool center of gravity **CG 900** location with 15Ah power tool battery pack **12** and an expansion head **1330** having 1" jaws.

Motor center of gravity **F** is an example of a motor center of gravity **MCG 850.**

In this example perspective of FIG. 3B, the tool center of gravity **CG 900** positions when using any of the batteries and expansion heads disclosed herein can be located along the motor centerline **2000** from a front view.

In this example perspective of FIG. 3B, the tool center of gravity **CG 900** positions when using any of the batteries and expansion heads disclosed herein can be located within and/or proximate to either of the upper grip **200** and/or upper grip area **1222,** or lower grip 400 and/or lower grip area **1277.** The **CG 900** can be within and/or proximate to handle housing **311.**

As shown in the figure, if the weight of the power tool battery pack **12** is kept equal, then the tool center of gravity **900** will shift upward in location as the weight of the plurality of jaws **31** increases.

FIG. 4 is a front side **50** view cross section of the expanding tool **10** taken at the motor centerline **2000.** The embodiment of FIG. 4 shows the motor **15** configured in the handle **300** such that the motor centerline is colinear with the fifth (5^{th}) stage drive gear centerline **3570.** FIG. 4 shows an embodiment of a configuration of transmission **3000** aligned with the motor centerline **2000.** In an embodiment, a transmission stages 1-4 centerline **3900** can be aligned colinearly with driveshaft **3450,** aligned colinearly with driveshaft centerline **3459,** and is aligned colinearly with 5th stage drive gear centerline **3570.**

FIG. 4 shows an embodiment of a configuration of transmission **3000** configured such that the transmission centerline **3010** is colinear with transmission stages 1-4 centerline **3900** which is colinear with the 5^{th} stage drive gear centerline **3570.** Thus, in an embodiment, the transmission centerline **3010** can be colinear with the respective centerlines of each of stages 1-4 and the 5^{th} stage drive gear centerline **3570** as shown in FIGS 4, 7A, 8, 9A, 9B, 10C, 13A, and 13C.

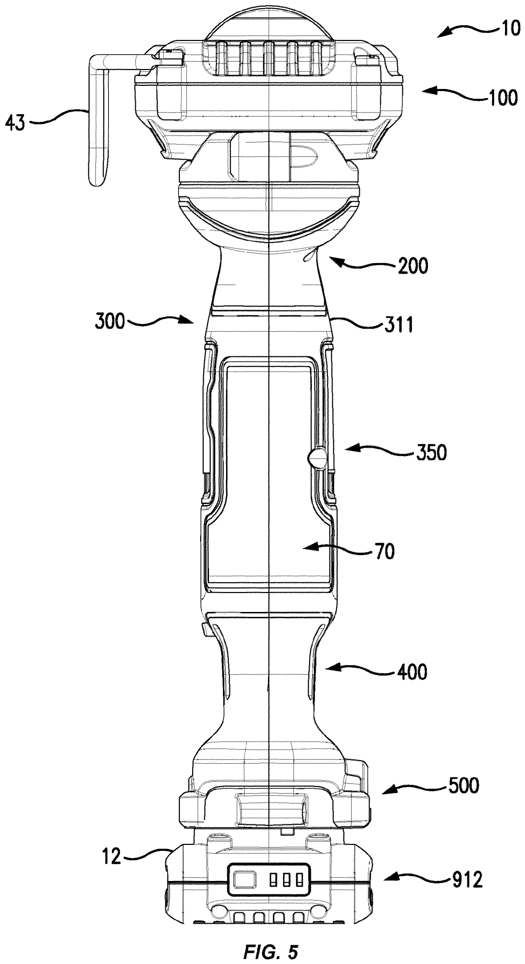

FIG. 5 is a back side **70** view of the expanding tool **10.**

FIG. 6A is a right side **80** view of the expanding tool **10** showing the expansion head **1330** having a plurality of jaws **31** in a closed configuration having a closed jaws outer diameter **9330,** and a closed jaws end outer diameter **9335.** A jaws diameter reduction **9332** and a cap outer diameter **9339** are also shown.

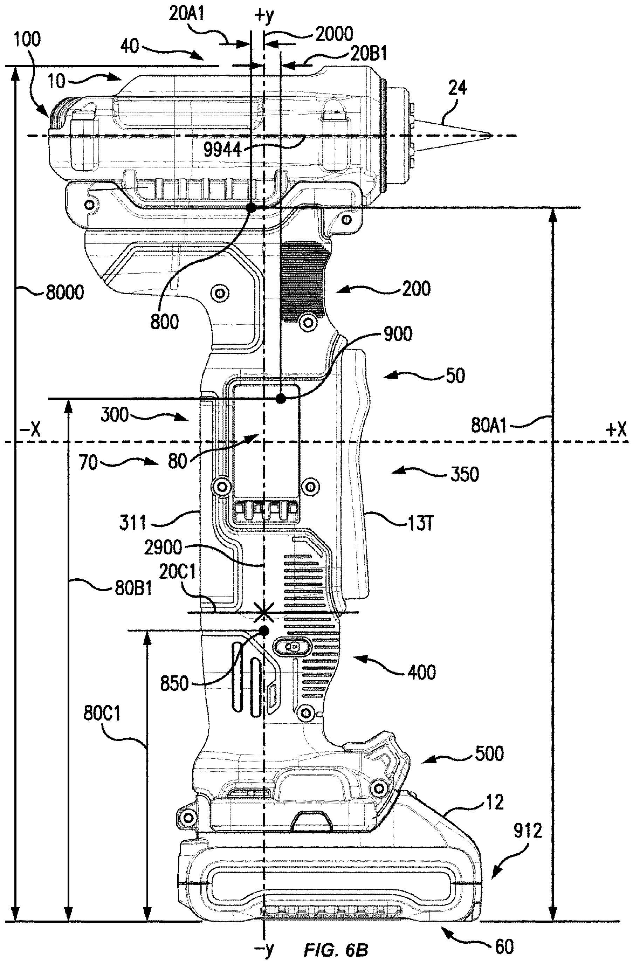

FIG. 6B is a right-side view of the expanding tool **10** showing a gearbox assembly (aka a "gearcase assembly") center of gravity **800,** motor center of gravity **850,** and the tool center of gravity **CG 900** as configured when the expanding tool **10** is used with a 5Ah power tool battery pack **12** attached and no expansion head **1330.** Herein the terms "gearbox" and "gearcase" are used synonymously, as are "gearbox assembly" and "gearcase assembly".

As shown in FIG. 6B, the tool center of gravity CG **900** can be configured at a position along the tool height **8000** between the gearbox assembly center of gravity **800** and the motor center of gravity **850.** The gearbox assembly center of gravity **800** and the motor center of gravity **850** positions are independent of the type of battery pack **12** and/or nosepiece assembly attached to the expanding tool **10.** The gearbox assembly center of gravity **800** location is fixed and remains constant based upon a given construction of a gearbox assembly **801.** The motor center of gravity **850** location is fixed and remains constant based upon a given construction of a motor **15.**

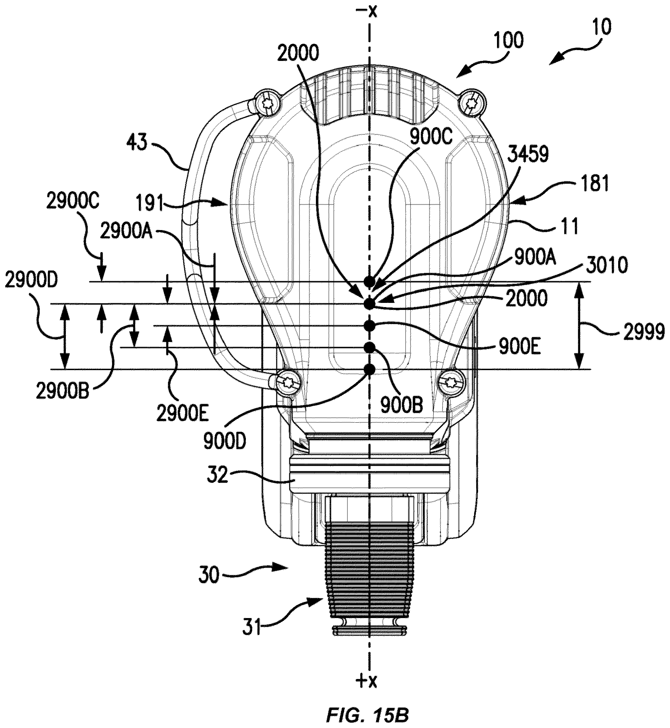

Differently, in embodiments the position of the tool center of gravity **CG 900** (also herein as "900") is in-part dependent upon the type of battery **12** and/or expansion head **1330** and/or the type of the plurality of jaws **31** attached to the expanding tool **10.** In embodiments, the position of the tool center of gravity **CG 900** can be located in various respective positions along the tool height **8000** between the gearbox assembly center of gravity **800** and the motor center of gravity **850** depending upon which type of battery pack **12** and/or expansion head **1330** and/or the type of the plurality of jaws **31** are attached. For example, see FIGS 10B and 15B which show nonlimiting examples of the tool center of gravity **CG 900** locations when various combinations of battery pack **12** and/or expansion head **1330** and/or the type of the plurality of jaws **31** are attached, *e.g.* 900A, 900B, 900C, 900D and 900E.

In embodiments, the location of the tool center of gravity **CG 900** can have different locations based upon different combinations of battery pack **12** and/or expansion head **1330** and/or the type of the plurality of jaws **31** attached, but can also be bounded along the tool height **8000** between the gearbox assembly center of gravity **800** and the motor center of gravity **850** and/or bounded within a CG containment space **9900** and/or an extended CG containment space **9999** and/or located with the handle **300** and/or between the cam spindle centerline plane **1900** and the motor centerline plane **2900** and/or other boundaries or tool features disclosed herein.

In the nonlimiting example embodiment shown in FIG. 6B, each of the centers of gravity are shown at an example location in the X, Y coordinate plane for the expansion tool 10 having a 5Ah power tool battery pack **12** attached and no expansion head **1330** attached, i.e.:

the gearbox assembly center of gravity **800** is shown at a -X distance **20A1** of 4.5 mm from the motor centerline **2000** and a Y distance **80A1** of 316 mm from the bottom side **60** of the expanding tool having the 5Ah power tool battery pack **12** attached and no expansion head **1330;**

the expansion tool center of gravity **900** is shown at a +X distance **20B1** of 8.5 mm from the motor centerline **2000** and a Y distance **80B1** of 238 mm from the bottom side **60** of the expanding tool having the 5Ah power tool battery pack **12 attached** and no expansion head **1330;** and

the motor center of gravity **850** is shown at a position on the motor centerline plane **2900** coplanar with motor centerline **2000,** which is 0 mm X distance **20C1** from motor centerline **2000,** and at and a Y distance **80C1** of 140 mm from the bottom side **60** of the expanding tool having the 5Ah power tool battery pack **12** attached and no expansion head **1330.**

FIG. 7A is a right side **80** cross section of the expanding tool **10** taken at the motor centerline **2000.** FIG. 7A shows a vertical configuration in which a stack up of selected components in the direction from the bottom side **60** to the top side **40** and configures the motor **15** proximate to the lower grip **400** and below the transmission **3000.** The embodiment of FIG. 7A shows the motor centerline **2000** colinear with the transmission stages 1-4 centerline **3900,** colinear with a driveshaft centerline **3459** and also collinear with a fifth (5^{th}) stage drive gear centerline **3570.**

Additionally, as shown in FIG. 7A, the motor centerline **2000** can extend through at least a portion of wedge **24.** Thus, from an ergonomic standpoint, the motor **15** is housed in the handle **300** and is configured below at least a portion of each of the transmission **3000,** stages 1-4 of the transmission **3000,** the driveshaft **3450,** and head assembly **100.** FIG. 7A shows the motor **15** configured below at least a portion of wedge **24.** The motor **15** can be optionally configured below at least a portion of cam **221,** which can be a radial cam **21.** In an embodiment, at least a part of the cam **221** can be configured vertically above, or vertically overlapping, at least a part of the motor **15.** The motor **15** can be optionally configured below at least a portion of cam **221** and at least a portion of wedge **24.**

FIG. 7A shows an example of an upper grip volume **204** which accommodates a portion of a hand **5000** of an operator when the hand **5000** grips the upper grip **200.** In the embodiment of FIG. 7A, the cam **21** is offset from the motor centerline **2000** by a cam spindle centerline distance **2100** (FIG. 9A) in a direction toward the head back end **75.** Fig. 7A also shows an upper palm grip volume **205** and an upper finger grip volume **209.** An upper grip handle inner volume **208** is also shown. The upper grip volume **205** and the lower grip volume **404** are also shown in FIG. 13C.

FIG. 7A shows a cam offset **2221** which is configures at least a portion of cam **221,** *e.g.* the radial cam **21,** at a distance from the motor centerline **2000.** In an embodiment, cam offset **2221** of cam **221,** or as the offset of the radial cam **21** as shown in FIG. 7A, ergonomically positions a portion of the cam spindle **150** such that when a user grips the upper grip **200** a portion of the hand **5000** of an operator hand is configured between the cam spindle **150** and at least one of a portion of the motor **15,** a portion of the transmission **3000,** a portion of the driveshaft **3450** and the motor centerline **2000.** In an embodiment, the cam offset **2221** can be in a range of 5 mm to 100 mm, *e.g.* 10 mm, 11 mm, 15 mm, 25 mm, 40 mm, 55 mm, 80 mm, or 90 mm.

The cam offset **2221** of cam **221,** which in nonlimiting example is shown in FIGS 7A, 12B, 13A and 13B as the offset of the radial cam **21,** ergonomically positions at least a portion of the upper palm grip volume **205** between a portion of the cam spindle **150** and at least one of a portion of the motor **15,** a portion of the transmission **3000,** a portion of the driveshaft **3450** and the motor centerline **2000.**

The cam offset **2221** of cam **221,** e.g. as shown in nonlimiting embodiment the offset of the radial cam **21** as shown in FIG. 7A, ergonomically positions at least a portion of the upper palm grip volume **205** is configured between a portion of the cam spindle drive gear **3550G** and at least one of a portion of the motor **15** and/or a portion of the transmission **3000** and/or a portion of the driveshaft **3450** and/or the motor centerline **2000.**

In an embodiment, the entirety of cam **21** can be at a distance from motor centerline **2000** toward a head back end **75.** In an embodiment, the motor centerline **2000** does not intersect any part of cam **21.**

In the embodiment of FIG. 7A, a cam axis centerline **229** can be colinear with a cam spindle centerline **1000,** each of which can have a portion configured vertically between the head back end **75** and at least a portion of the handle **300** and/or handle housing **311.**

In an embodiment, the cam offset **2221** can be the same as the cam spindle centerline distance **2100** as shown in FIG. 9A.

In an embodiment, as shown in FIG. 7A, the motor axis **1515** and motor centerline **2000** (FIG. 7A) can be located within the handle interior volume **345** of the upper grip **200** of the handle housing **311.** The motor axis **1515** and motor centerline **2000** (FIG. 7A) can also be located within the handle interior volume **345** of the lower grip **400** of the handle housing **311.** In the embodiment of FIG. 7A, the motor axis **1515** and motor centerline **2000** (FIG. 7A) can also be located within the handle interior volume **345** of the upper grip **200** and within the handle interior volume **345** of the lower grip **400.**

FIG. 7A shows, the expanding tool **10** can have a power source **912,** which can be at least one of a battery pack **12** and a power cord **9121** (not shown).

The expanding tool **10** can be held comfortably by a wide variety of users having various hand sizes ranging respectively from extra-small to extra-large, and sizes in between. In embodiments, the tool center of gravity **900** fits ergonomically in a user's hand when gripping the upper grip **200.** In nonlimiting example as shown in FIG. 7A when a 5 Ah battery 12 and an expansion head **1330** having 1" jaws are attached, the tool center of gravity **900** is shown in a location within upper grip volume **204.**

In the embodiment shown in FIG. 7A, the tool center of gravity **900** is configured between the trigger **13T** and motor centerline **2000** adjacent to the fourth (4^{th}) stage **3400** (FIG. 7A).

In the embodiment of FIG. 7A, shows a cam axis centerline **229** can be colinear with a cam spindle centerline **1000,** each of which can have a portion configured vertically above a portion of the back of a hand **6000** of an operator when the operator grips the upper palm grip **201.** In an embodiment, a cam axis centerline **229** can be colinear with the cam spindle centerline **1000,** each of which can have a portion configured vertically above an upper mars **5502** (FIG. 12) portion of a hand **5000** of an operator when the operator grips the upper palm grip **201.**

In an embodiment, a cam axis centerline **229** can be colinear with a cam spindle centerline **1000,** each of which can have a portion configured vertically above an upper mars **5502** portion of one or more of the dorsal interossei muscles **6500** (FIG. 12) of the hand **5000** when the operator grips the upper palm grip **201.**

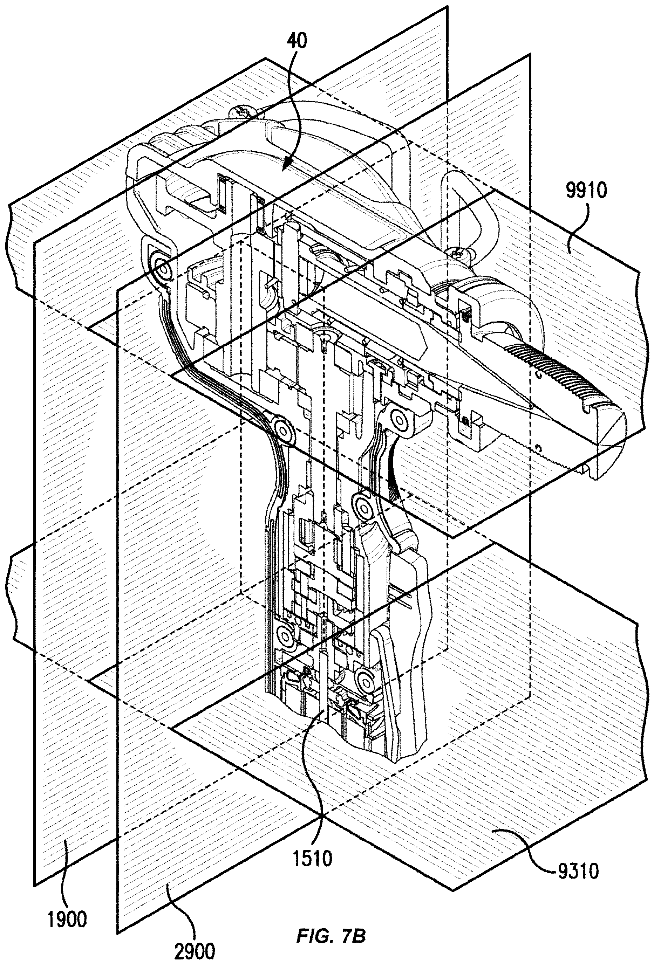

FIG. 7B shows a section of FIG. 7A taken from a portion of the motor 15 and a portion of the motor shaft **1510** vertically along the height to the top side **40** of the expanding tool **10.** FIG. 7B is the right-side cross section of 7A of the expanding tool **10** showing a number of planes.

FIG. 7B shows a motor centerline plane **2900** and a cam spindle centerline plane **1900.** In the embodiment of FIG. 7B, the motor centerline plane **2900** and the cam spindle centerline plane **1900** can be parallel. In an embodiment, the tool center of gravity **900** can be located between the motor centerline plane **2900** and the cam spindle centerline plane **1900.**

Fig. 7B also shows a wedge centerline plane **9910** and a transmission plane **9310.** In the embodiment of FIG. 7B, the wedge centerline plane **9910** and the transmission plane **9310** can be parallel. In the embodiment of FIG. 7B, the wedge centerline plane **9910** and the transmission plane **9310** can be perpendicular to each of the motor centerline plane **2900** and the cam spindle centerline plane **1900.** In an embodiment, the tool center of gravity **900** can be located between the wedge centerline plane **9910** and the transmission plane **9310.**

In embodiments, the tool center of gravity **900** can be located between the motor centerline plane **2900** and the cam spindle centerline plane **1900** and also be located between the wedge centerline plane **9910** and the transmission plane **9310.**

FIG. 7C is the right-side cross section of 7A showing a center of gravity containment space **9900** (also as "CG containment space **9900").** Herein, center of gravity is abbreviated as "CG".

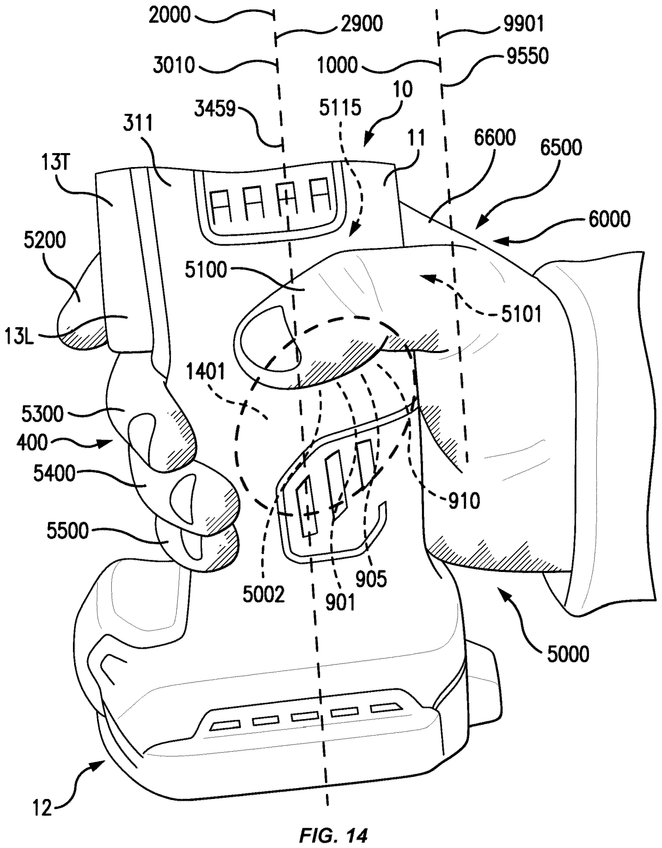

In nonlimiting example, the CG containment space **9900** is shown as the space bounded by the wedge centerline plane **9910** forming the CG upper boundary **9910** and the transmission plane **9310** forming the CG lower boundary **9920.** In the embodiment of FIG. 7C, the motor centerline plane **2900** forms the CG front boundary **9930** and the cam spindle centerline plane **1900** forms the CG back boundary **9940.** The CG right side boundary **9960** is coplanar with the head right side **181** (FIG. 14) and the CG left side **191** (FIG. 14).

In an embodiment, the expanding tool 10 having a cam opening centerline at a distance between the head back end **75** and the motor centerline **2000** which contains the tool center of gravity **900** within the CG containment space **9900** under normal use conditions when held generally vertically by a user.

In the embodiment of FIG. 7C, the upper palm grip interior volume can contain the tool center of gravity **900.**

In nonlimiting example as shown in FIG. 7C when a 2 Ah battery 12 and an expansion head **1330** having 1" jaws are attached, the tool center of gravity **900** is shown in a location within upper grip volume **204.**

FIG. 7D is a right-side cross section of 7A view showing a tool center of gravity containment space **9900** having a CG front boundary **9930** configured between the motor centerline plane **2900** and housing front side **1111,** and in an embodiment between the motor centerline plane **2900** the trigger **13T.**

As shown in FIG. 7D, The CG containment volume **9899** is the total volume of the CG containment space **9900** configured as a back containment space and the extended CG containment space **9999** configured as a front containment space. In the embodiment of FIG. 7D, a tool center of gravity containment space **9900** contains the tool center of gravity **900.** FIG. 7D also shows upper grip interior volume **1204** and upper finger grip interior volume **1209.** In the embodiment of FIG. 7D, the tool center of gravity **900** is contained within the upper finger grip interior volume **1209.**

In nonlimiting example as shown in FIG. 7D when a 2 Ah battery **12** and an expansion head **1330** having 1.5" jaws are attached, the tool center of gravity **900** is shown at a location within upper grip volume **204.**

FIG. 7D also shows an extended CG containment space **9999** which extends to encompass the volume from the motor containment plane **2900** to the front side of the trigger **13T.**

FIG. 8 is a detail cross section view from the right-side **80** of a portion of the transmission **3000** taken at the motor centerline **2000** and length centerline plane **2975** (FIG. 1A) and showing an embodiment of the expanding tool **10** having a five-stage transmission **3005.**

FIG. 8 shows motor **15** having motor shaft **1510** driving transmission **3000.** In non-limiting embodiment, FIG. 8 shows a transmission **3000** which in the embodiment of FIG. 8 is a five-stage transmission **3005.**

In an embodiment, the transmission **3000** can be a five-stage transmission **3005** having a four (4) stage planetary gear transmission **3909** (FIG. 8) which drive a fifth (5^{th}) stage **3500** of the five-stage transmission **3005.** In such embodiment, the four (4) stage planetary gear transmission **3909** can have: a first (1^{st}) stage **3100** having a first (1^{st}) stage pinion **3100C** driven by the motor shaft **1515,** which in turn drives a first (1^{st}) stage planetary gear **3100PG;** a second (2^{nd}) stage **3200** having a second (2^{nd}) stage carrier **3200C** driven by the (1^{st}) stage planetary gear **3100PG** which in turn drives the (2^{nd}) stage planetary gear **3200PG;** a third (3^{rd}) stage **3300** having a third (3^{rd}) stage carrier **3300C** driven by second (2^{nd}) stage planetary gear **3200PG,** which in turn drives a third (3^{rd}) stage planetary gear **3300PG;** a fourth (4^{th}) stage **3400** having a fourth (4^{th}) stage carrier **3400C** driven by the third (3^{rd}) stage planetary gear **3300PG** which in turn drives the fourth (4^{th}) stage planetary gear **3400PG** which drives a drive shaft carrier **3450C.** The drive shaft carrier **3450C** can connect with and drive a driveshaft **3450.**

In an embodiment, as shown in FIG. 8, the fifth (5^{th}) stage transmission **3500** can be a cam spindle drive stage **3500D.**

In the example embodiment of FIG. 8, a fifth (5^{th}) stage **3500** can have a fifth (5^{th}) stage drive gear **3500G** driven by driveshaft **3450** which in turn drives a fifth (5^{th}) stage drive gear **3500G** which drives cam spindle **150.**

As shown in the embodiment of FIG. 8, motor **15** can drive gear **3500G** to rotate along motor axis **1515** which is shown colinear with motor centerline **2000.** In an embodiment, the motor **15** can drive the fifth (5^{th}) stage drive gear **3500G** through a transmission, *e.g.* transmission **3000,** having stages 1-5, in which the fourth (4^{th}) stage **3400** drives the fifth stage **3500,** as shown in FIG. 8.

In other embodiments, the motor **15** can drive a drive gear directly which drives a spindle gear to drive an offset spindle and/or cam which is at a distance from the motor centerline **2000.**

Thus, in embodiments, the motor can connect with and drive a gear which drives the cam **221,** which can be the radial cam **21,** either directly, or through other gears, *e.g.* a transmission can have from 1 ... n stages, wherein n can be a small or large number, *e.g.* n=2, 3, 4, 5, 6, 7, 10, or greater.

As shown in the embodiment of FIG. 8, fifth (5^{th}) stage drive gear **3500G** can be engaged with a cam spindle drive gear **3550G** to selectively drive radial cam **21** to rotate. In another embodiment, the cam spindle drive gear **3550G** can connect with one or more gears which can drive the cam **221,** such as the radial cam **21,** to rotate. In an embodiment, the transmission can use a number of gear ratios to generate rotational force upon the cam spindle **150** (FIG. 7A). In an embodiment, the five-stage transmission **3005** can generate a strong expansion force of the plurality of jaws **31,** producing an outward force in the range of 3,000 N-20,000 N, *e.g.* 5000 N, 10,000 N and 15,000 N. The five-stage transmission **3005** can achieve a torque on cam spindle **150,** which in an embodiment can be the 5^{th} stage output spindle **3555,** *e.g.* the cam spindle **150,** in the range of 5 Nm to 300 Nm, *e.g.* 10 Nm, 50 Nm, 100 Nm, 150 Nm, 200 Nm and 250 Nm. In an embodiment, the five-stage transmission **3005** can achieve a gear reduction ratio, also herein as "gear ratio", in a range of 325 to 32,768, *e.g.* 350, 500, 546, 600, 1000 and greater.

In an embodiment, the 1^{st} stage **3100** gear reduction ratio can be in a range of 1.5 to 8.0, *e.g.* 3.0, 4.9, 7.0 or 7.5. In an embodiment, the 2^{nd} stage **3200** gear reduction ratio can be in a range of 1.5 to 8.0, *e.g.* 3.0, 4.9, 7.0 or 7.5. In an embodiment, the 3^{rd} stage **3300** gear reduction ratio can be in a range of 1.5 to 8.0, *e.g.* 2.0, 3.6, 5.5 or 6.0. In an embodiment, the 4^{th} stage **3400** gear reduction ratio can be in a range of 1.5 to 8.0, *e.g.* 2.0, 3.6, 5.5 or 6.0. In an embodiment, the 5^{th} stage **3500** gear reduction ratio can be in a range of 1.5 to 8.0, *e.g.* 1.71 2.0, 4.0, 5.5 or 6.0.

In embodiments, the total gear reduction ratio of the transmission **3000,** *e.g.* the five-stage transmission **3005,** can be in a range of 7.6 to 32768, *e.g.* 36, 81, 61, 546, 529, 639, 1078, 1482, 5929, 9702, 12150 or 16537.

In an embodiment a gearbox assembly **801** (FIG 11) can have a weight in a range of 2.5 lbs to 8 lbs, *e.g.*: 3 lbs, 4 lbs, 4.9 lbs, 5 lbs, 6 lbs, or 7 lbs.

In an embodiment, the motor **15** can have a length in a range of 40 mm to 80 mm, *e.g.*: 45 mm, 50 mm, 52 mm, 60mm, 65 mm, or 75 mm. In an embodiment, the motor **15** can have a weight in a range of 0.25 lbs to 2.5 lbs, *e.g*.: 0.5 lbs, 0.6 lbs, 0.7 lbs, 0.8 lbs, 1.0 lbs, 1.5 lbs, or 2.0 lbs.

In an embodiment the motor can be configured such that the motor axis **1515** is not colinear with and/or not parallel to the transmission centerline **3010.**

In an embodiment, the five-stage transmission **3005** can achieve high performance characteristics to expand pipes and/or tubes having nominal pipe diameters in a range from 3/8 in to 6.0 in, or 3/8 in in to 3.0 in, or 0.5 in to 2 in, with nominal pipe sizes *e.g*.: 0.5 in, 0.75 in, 1.0 in, 1.25 in, 1.5 in, 2.0 in, 2.5 in, 3.0 in, 4.0 in, 4.5 in, 5.0 in.

FIG. 9A is a detail cross section view from the right side **80** of the head assembly **1000.** FIG. 9A shows driveshaft **3450** configured to drive the fifth (5^{th}) stage drive gear **3500G,** which drives a cam spindle drive gear **3550G,** which drives cam spindle **150,** which drives cam **221,** which in a non-limiting embodiment can be a radial cam **21.**

In the embodiment of FIG. 9A, cam **221** is shown offset toward the back side **70** of the expanding tool **10** a distance from motor centerline **2000.** In the FIG. 9A embodiment, cam **221** is also offset toward the back side **70** a distance from fifth (5^{th}) stage drive gear centerline **3570,** which is shown colinear with motor centerline **2000.**

FIG. 9A shows cam spindle drive gear centerline **9550** colinear with cam spindle centerline **1000** at a distance from motor centerline **2000.** In an embodiment, the motor axis **1515** (FIG. 8) can be colinear with motor centerline **2000** and can be located between the cam rotating axis **9525** and the jaw assembly **30.** In an embodiment, the cam rotating axis **9525** can be colinear with the cam spindle drive gear centerline **9550.** As shown in FIG. 9A the motor rotating axis **1515** (FIG. 8) and/or the motor centerline **2000** can be parallel to the cam rotating axis **9525** and/or the cam spindle centerline **1000.**

As shown in FIG. 9A, the cam spindle **150** can have a cam spindle base **151** that passes through a fifth (5) stage spindle gear opening **3577** having a fifth (5) stage spindle gear centerline **3579.** In the embodiment of FIG. 9A, the cam spindle centerline **1000** can be colinear with the fifth (5) stage spindle gear centerline **3579.**

FIG. 9A shows cam spindle opening **921,** which in an embodiment can be an opening in a radial cam **21** and can have a radial cam opening centerline **9921** which can be colinear with the cam spindle centerline **1000.** In embodiments, a cam spindle opening **921** and a cam spindle opening centerline **9931.** In embodiments, the cam spindle opening centerline **9931** can be same as and/or colinear with the radial cam opening centerline **9921.**

In non-limiting example, as shown in FIG. 9A, the cam **21** and cam spindle **150** can be formed as a unitary piece.

Any piece and/or part of the expanding tool 10 can optionally be formed and/or manufactured by 3D printing.

FIG. 9A also shows a number of dimensions and geometric relationships. A tool length **1500** is shown extending from a head back end **75** to a jaws front end **1250,** and can have a length in a range of 150 mm to 400 mm. A head back end offset **1200** is shown to extend a length from the head back end **75** to the motor centerline **2000,** and can have a length in a range of 50 mm to 200 mm.

A cam spindle centerline distance **2100** is shown to extend a distance from the motor centerline **2000** to the cam opening centerline **1901,** and can have a length in a range of 5 mm to 200 mm. Thus, in non-limiting example the cam spindle centerline distance **2100** can be in a range of 10 mm to 200 mm, e.g. 15 mm, 20 mm, 25 mm, 30 mm, 40 mm, 50 mm, 75 mm, 100 mm, 150 mm, or 175 mm.

In an embodiment, weight can be distributed across the distance from the head back end **75** to the jaws front end **1250.** In the embodiment shown in FIG. 9A, the rear weight associated with the radial cam **21** is configured at distance from the motor centerline **2000.** As shown in FIG. 9A, to the cam rotating axis **9525** is shown at a cam spindle centerline distance **2100** away from the motor centerline **2000.** FIG. 9A also shows the cam spindle drive gear centerline **9550** a cam spindle centerline distance **2100** away from the motor centerline **2000.**

Thus, in non-limiting example the cam spindle drive gear centerline **9550** can be at a distance which is the same, or different, from the cam spindle centerline distance **2100** the cam spindle drive gear centerline **9550** can be at a distance away from the motor centerline in a range of 5 mm to 200 mm, *e.g*. 10 mm 15 mm, 20 mm, 25 mm, 30 mm, 40 mm, 50 mm, 75 mm, 100 mm, 150 mm, or 175 mm.

In the embodiment of FIG. 9A, the configuration of the cam rotating axis **9525,** colinear with the cam spindle drive gear centerline **9550,** configured a cam spindle centerline distance **2100** away from the motor centerline **2000** achieves locating the tool center of gravity **CG 900,** within the handle interior volume **345** of at least one of the upper grip **200** and lower grip **400** of the handle housing **311.**

In an embodiment, an ergonomic balance of weight of at least a portion of the expanding tool **10** can be configured across the hand **5000** of an operator holding the expanding tool **10** by the upper grip **200** or lower grip **400** can be achieved by distributing the weight across tool length **1500** by configuring the cam rotating axis **9525** colinear with the cam spindle drive gear centerline **9550** at a cam spindle centerline distance **2100** away from the motor centerline **2000** and configuring the jaws front end **1250** at a motor centerline to jaws front end distance **2200** which can achieve locating the tool center of gravity **CG 900,** within the handle interior volume **345** of at least one of the upper grip **200** and lower grip **400** of the handle housing **311.**

A head back end cam spindle centerline distance **1100** can extend from the head back end **75** to the cam opening centerline **9901,** and can have a length in a range of 20 to 200 mm, or 30 mm to 150 mm.

A cam axis centerline to jaws back end distance **1110** can extend from the cam axis centerline **229** to the jaws back end **1240,** and can have a length in a range of 50 mm to 300 mm, or 60 to 200 mm *e.g.*: 50 mm, 75 mm, 80 mm, 90 mm, 100 mm, 150 mm, or 200 mm.

A cam opening centerline to jaws front end distance **1300** can extend from a cam opening centerline **1901,** which is colinear with the cam spindle centerline **1000** and colinear with the cam spindle drive gear centerline to the jaws front end **1250,** and can have a length in a range of 100 mm to 300 mm, or 120 mm to 300 mm.

A motor centerline to jaws back end distance **1210** can extend from the motor centerline **2000** to the jaws back end **1240,** and can have a length in a range of 30 mm to 200 mm, or 40 mm to 180 mm. A motor centerline **2000** to jaws front end distance **2200** can extend from the motor centerline **2000** to the jaws front end **1250,** and can have a length in a range of 50 mm to 300 mm, or 80 mm to 200 mm. A motor centerline **2000** to a collar shoulder distance **1225** can extend from the motor centerline **2000** to the front side **1122** of the collar shoulder **1121,** and can have a length in a range of 50 mm to 300 mm, or 80 mm to 220 mm, or 35 mm to 175 mm. A collar shoulder to jaws back end distance **1220** can extend from a front side **1122** of the collar shoulder **1121** to the jaws back end **9234,** and can have a length in a range of 5 mm to 40 mm. In an embodiment, a wedge interface contact line **9240** can be colinear with the jaws back end **9234.**

In an embodiment, a threaded expansion head **29** can be threadedly engaged to a potion of the collar **26,** or collar shoulder **1121.** In an embodiment, a threaded expansion head **29** can have a cap **32F** and can be threadedly engaged to a portion of the collar **26,** or collar shoulder **1121.**

FIG. 9B is a top view gear case cross section taken across the 5^{th} stage **2500** of transmission **3000** from the embodiment of FIG. 9A.

In the embodiment of FIG. 9B, the cam spindle drive gear **3550G** is engaged with the cam spindle **150** which has a cam spindle key **151** configured to engage a double D opening, *e.g*. a double D spindle gear lock opening **9569.** In FIG. 9B, the cam spindle drive gear **3550G** shows the double D spindle gear lock opening **9569** into which the cam spindle key **151** is engaged.

FIG. 9B shows the fifth (5^{th}) stage drive gear **3500G** engaged with the cam spindle drive gear **3550G** such that when the motor selectively drives the transmission the fifth (5^{th}) stage drive gear **3500G** drives the cam spindle drive gear **3550G** which drives the cam spindle **150** driving radial cam **21** which in turn drives the wedge **24** and drives the jaws **31** from a closed position to an open position.

FIG. 9B shows an embodiment in which the cam spindle centerline **1000,** the cam spindle drive gear centerline **9550,** the fifth (5^{th}) stage spindle gear opening centerline **3579,** and cam axis centerline **229** are all colinear and configured at a distance from the motor centerline **2000** and the fifth (5^{th}) stage drive gear centerline **3570.** In the embodiment of FIG. 9B, the motor centerline **2000** and the fifth (5^{th}) stage drive gear centerline **3570** are shown to be colinear. In an embodiment, the fifth (5^{th}) stage drive gear centerline **3570** can be colinear with the transmission centerline **3010.**

FIG. 9C is a top side view of a cross section of the expanding tool taken through the wedge centerline **9924** as shown in FIG. 1A and 9A. Fig. 9C also shows a top view of a radial cam **21** used in the jaws rotating/expanding mechanism **20.**

FIG. 9C shows the radial cam **21** having a cam front end **223** and a cam back end **225.** The radial cam **21** can have a cam opening **921** and a cam axis centerline **229** which can be colinear with the cam spindle centerline **1000.**

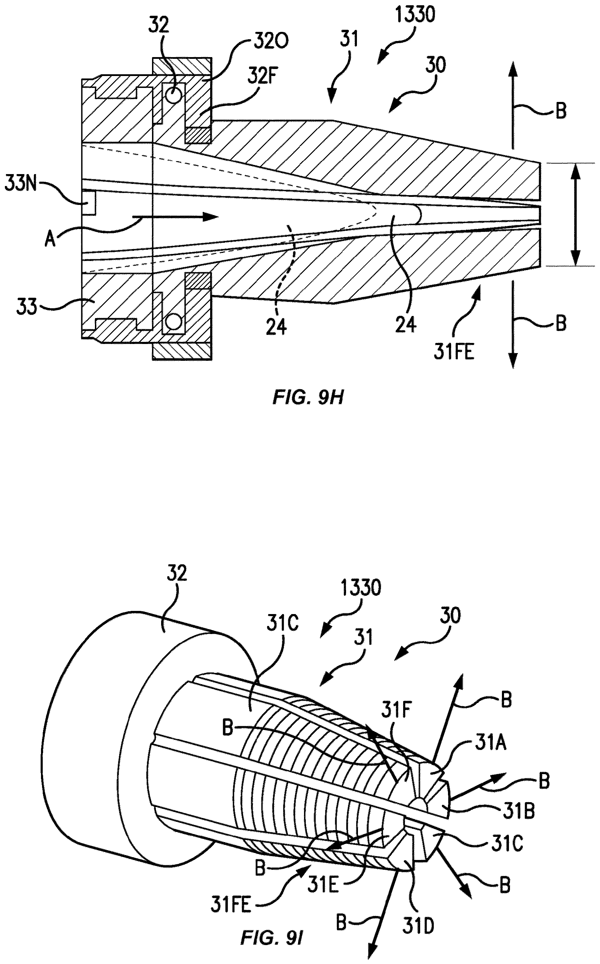

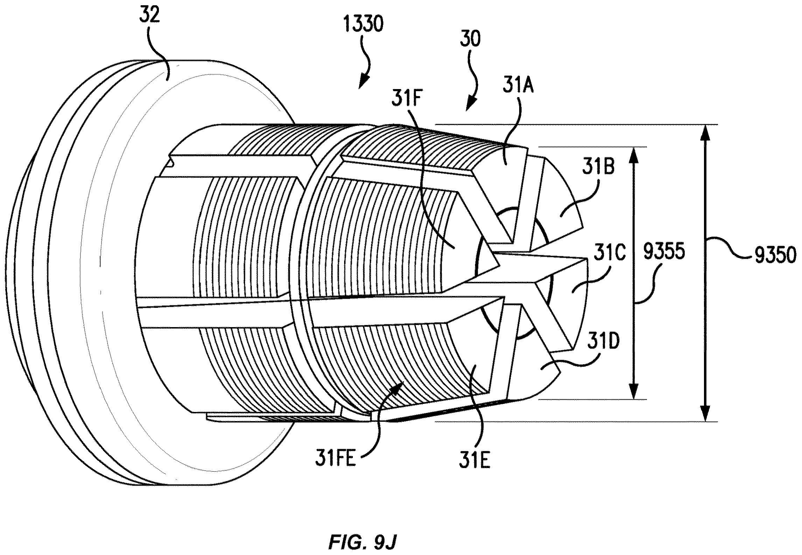

FIG. 9C shows the cam front end **223** configured to contact and selectively move wedge **24** into contact with jaws **31** to drive the movement of jaws **31** from a closed position (FIG. 9H) to an open position (FIG. 9J).

In an embodiment, the wedge **24** can have a cone shape, *e.g*. a cone **124** (FIG. 9A). As shown in FIG. 9C, radial cam **21** drives wedge **24,** which can be the cone **124** to move along wedge movement axis **9944,** which can be colinear with the wedge centerline **9924** and the wedge **24** drives the jaw assembly **30** jaws to open the plurality of jaws **31** in radial direction.

In an embodiment, as shown in FIG. 9C the cam **221** rotates counterclockwise, in the direction of Arrow **R,** driving wedge **24** along wedge movement axis **9944** toward the plurality of jaws **31** as shown by Arrow **A,** to move the plurality of jaws **31** from a closed position to an open position as shown by Arrow **B.**

FIG. 9C shows an embodiment in which the jaws **31** rotate clockwise, in the direction of Arrow **JR,** when the cam rotates counterclockwise, in the direction of Arrow **R.**

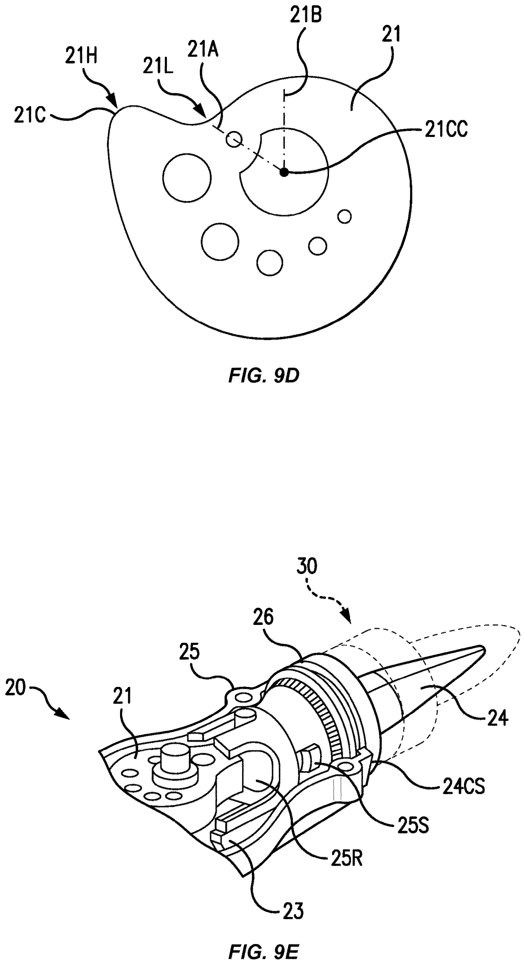

In an embodiment, the wedge **24** can be returned from the open position to the closed position by the action of spring **25S** when the cam rotates from its highest position **21H,** *e.g.* highest position point **21C,** to lowest position **21L,** *e.g*. lowest position point **21A** (FIGS 9C and 9D), the plurality of jaws **31** the plurality of jaws **31** can be returned from the open position to the closed position by the action of spring **32O** (FIG. 9A).

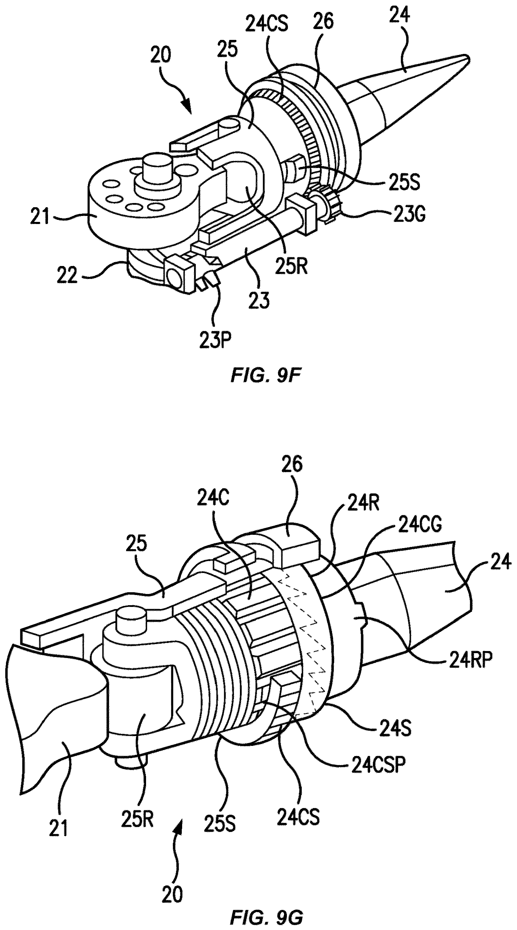

In an embodiment, the jaws rotating/expanding mechanism **20** can have a radial cam **21.** In an embodiment, an index cam **22** can optionally be used (FIG. 9F).

In embodiments, the cam **221,** *e.g.* radial cam **21,** and/or the index cam **22** can configured to be driven by, or moved in conjunction or coordination with, the movement of cam spindle **150,** so that radial cam **21** and/or index cam **22** rotate when cam spindle **150** rotates. In an embodiment, shaft **23** (FIG. 9F) can rotate about an axis substantially perpendicular to the axis of cam spindle **150.**

FIG. 9D is a detail view of the radial cam **21.** In an embodiment, the roller **25R** can move along the surface of radial cam **21.** While the distance between the center **21CC** (FIG. 9D) and point **21A** can be the same as the distance between the center **21CC** and point **21B,** the distance between the center **21CC** and a point in the cam surface can keep increasing until roller **25R** contacts point **21C.** Such increasing distance can cause roller **25R** (and thus wedge **24)** to move towards jaws **31,** causing them to radially expand along direction **B** (as shown in FIG. 6B 9H). As radial cam **21** continues to rotate past point **21C** towards point **21A,** spring **25S** pushes roller **25R** (*e.g*. FIG. 9A and 9C) into contact with radial cam **21** and pulls wedge **24** therealong towards radial cam **21.** This allows O-ring **32O** to pull jaws **31** towards the position shown in FIGS. 6A 9I-6B 9H.

Referring to FIGS 9E-9J, the jaw assembly **30** preferably engages rotation ring **24R** and/or collar **26,** in a manner similar to that described in US Patent Nos. 9,975,289, 8,517,715 and 8,763,439 which are fully incorporated herein by reference.

FIG. 9E is a first (1^{st}) detail view of the jaws rotating/expanding mechanism **20.**

As shown in FIG. 9F, the jaws rotating/expanding mechanism **20** can also include a wedge **24,** which preferably moves in a reciprocating motion. Wedge **24** can be connected to a sleeve **25.** The sleeve **25** can slidingly support a roller assembly **25R,** which contacts radial cam **21.** A spring **25S** can abut an end of wedge **24** and roller assembly **25R,** thus biasing roller assembly **25** towards radial cam **21.**

FIG. 9F is a second (2^{nd}) detail view showing a shaft **23** which drives a gear ring **24CS.** As shown in FIG. 9F above, clutch ring **24C** (FIG. 9G) can have axial grooves **24CG** (FIG. 9G). Such grooves **24CG** can be engaged by protrusion(s) **24CSP** (FIG. 9G) of a gear ring **24CS** (FIG. 9F). The axial position of gear ring **24CS** can be fixed in order to maintain contact with gear **23G** (FIG. 9F). By having protrusion(s) **24CSP** engage grooves **24CG,** gear ring **24CS** will preferably rotate together clutch ring **24C,** while allowing clutch ring **24C** to separately move along its axis.

In an embodiment, a clutch ring **24C** and a rotation ring **24R** can be mounted on and around wedge **24.** In an embodiment, wedge **24,** clutch ring **24C** and rotation ring **24R** can be substantially coaxial. Clutch ring **24C** and rotation ring **24R** can have sawtooth-shaped teeth **24S** (FIG. 9G) that engage each other, so that clutch ring **24C** and rotation ring **24R** can rotate together about wedge **24.** Clutch ring **24C** and rotation ring **24R** can also slide along wedge **24.** In an embodiment, the rotation of shaft **23** (FIG. 9F) can cause gear **23G** and gear ring **24CS** (FIG. 9F) to rotate. The rotation of gear ring **24CS** can cause clutch ring **24C** (FIG. 9G) and rotating ring **24R** to rotate. The rotation of rotating ring **24R** can cause in turn the rotation of jaws **31.** In embodiments, the rotation of cam **221,** *e.g*. radial cam **21,** can be conducted at the same time and/or in conjunction with the rotation of roller **25R** (FIG. 9F).

In embodiments, the rotation of cam **221,** *e.g*. the radial cam **21,** can be conducted at the same time and/or in conjunction with the rotation of shaft **23** and optionally a second protrusion **23P** which can be optionally be driven by the index cam **22.**

FIG. 9G is a third (3^{rd}) detail view showing a clutch ring **24C.** In an embodiment, if rotation ring **24R** were to jam or stall and no longer rotate, if protrusions **24CSP** force clutch ring **24C** to rotate, the sawtooth-shaped teeth **24S** of clutch ring **24C** will ride along the sawtooth-shaped teeth **24S** of rotation ring **24R,** separating clutch ring **24C** from rotation ring **24R.** After a tooth **24S** of clutch ring **24C** has cleared the corresponding tooth **24S** of rotation ring **24R,** spring **25S** pushes clutch **24C** towards rotation ring **24R,** allowing clutch ring **24C** to continue to rotate and ride along the sawtooth-shaped teeth **24S** without damaging the different components of jaws rotating/expanding mechanism **20.** In an embodiment, a collar **26** can captures clutch ring **24C,** rotation ring **24R** and wedge **24.**

FIG. 9H is a detail view of an expansion head **1330** having the plurality of jaws **31** in a closed configuration. As shown in FIG. 9H, Jaw assembly **30** can have a plurality of jaws **31,** *e.g*. six (6) jaws (FIG. 9I), which can be captured within a cap **32.** As shown in FIG. 9A, in an embodiment, jaws **31** can be captured by a flange **32F** of cap **32.** In an embodiment, the jaws **31** can slide along flange **32F** when wedge **24** moves along the direction of arrow **A** so that jaws **31** can move away from the axis of wedge **24** in an outward radial direction as shown by arrows **B.** A resilient O-ring **32O**, or a jaw spring **32J** (not shown), can be disposed around all jaws **31** so that, when wedge **24** moves in a direction opposite to the direction of arrow **A,** jaws **31** will move towards the axis of wedge **24** in a direction radially opposite to direction of arrows **B.**

FIG. 9I is a detail view of an expansion head **1330** having the plurality of jaws **31** in a half-open (50% open, 50% expanded) configuration. The example of FIG. 9I shows the plurality of jaws **31** of expansion head **1330** expanding radially in the direction of arrows **B.**

FIG. 9J is a detail view of an expansion head having the plurality of jaws in a fully-open (100% open, 100% expanded) position. FIG. 9J shows an open jaws end outer diameter **9355** and an open jaws outer diameter **9350.**

As shown in FIG. 2 and FIGS 9H-9J, each jaw **31** can have a frustoconical end **31E** that extends from a cylindrical portion **31C1** (FIG. 2). In an embodiment, ribs **31R** (FIG. 1) can be formed on the frustoconical ends **31FE.** However other constructions can omit the ribs **31R,** or use other textures, contours and jaw shapes. In an embodiment, two or more jaws **31,** or a number of jaws **31,** can be used to define a complete 360-degree jaw section that fits within a PEX tube, or pipe, to be expanded. In an embodiment, cap **32** can be engaged to housing **11H** and/or collar **26.** In an embodiment, cap **32** can be engaged to collar **26** by a threaded connection. Each jaw **31** can have a second end **33.** Each end **33** can have at least one notch **33N** (FIGS 10A) that engages a corresponding protrusion **24RP** (FIG. 9G) on rotating ring **24R** (FIG. 9G).

FIG. 10A is a left-side view of the expanding tool **10.** FIG. 10A shows example heights of the tool height **8000.** FIG. 10A also shows nonlimiting examples of locations of the gearbox assembly center of gravity **800,** the motor center of gravity **850** and the tool center of gravity **900.**

In an embodiment, the gearbox assembly center of gravity **800** can have a gearbox assembly center of gravity height **8010** in a range of from 180 mm to 520 mm, or 200 mm to 420 mm from the bottom side **60.**

In an embodiment, the motor center of gravity **850** can have a motor center of gravity **8020** in a range of from 50 mm to 450 mm, 100 mm to 300 mm from the bottom side **60.**

In an embodiment, the tool center of gravity **900** can have a tool center of gravity height **8030** in a range of from 100 mm to 400 mm, or 150 mm to 370 mm from the bottom side **60.**

In nonlimiting example, FIG. 10A, shows tool height **8000** and the vertical positions along the Y axis at a distance from the tool bottom side **60** of the gearbox assembly center of gravity **800,** the motor center of gravity **850** and the tool center of gravity **900,** having a5Ah power tool battery pack **12** attached and no expansion head **1330** *e.g.*:

FIG. 10A shows an example of the gearbox assembly center of gravity **800** at a Y distance **8010** of 316 mm from the bottom side **60** of the expanding tool having the 5Ah power tool battery pack **12** attached and no expansion head **1330;**

FIG. 10A shows an example of the motor center of gravity **850** at a Y distance **8020** of 238 mm from the bottom side **60** of the expanding tool having the 5Ah power tool battery pack **12** attached and no expansion head **1330;** and

FIG. 10A shows an example of the tool center of gravity **900** at a Y distance **8030** of 140 mm from the bottom side **60** of the expanding tool having the 5Ah power tool battery pack **12** attached and no expansion head **1330;**

As shown in FIGS 10A and 10B, as the weight of the power tool battery pack **12** approach being equal to the weight of the expansion head **1330** (having attached a selection of the plurality of jaws **31)** and the weight of the gearbox assembly **801** and its contents, the center of gravity **900** of the expansion tool **10** machine will shift upward away from bottom side **60.** For example, other factors being equal, as the weight of the plurality of jaws **31** increases the center of gravity **900** of the expansion tool **10** machine will shift upward away from bottom side **60..** FIG. 10E shows geometric details of the cross section of the grip of FIG. 11A.

FIG. 10B shows examples of center of gravity distances from the top side **40** of the expanding tool **10,** from the left side view. In an embodiment, the motor centerline **2000** and transmission centerline **3010** can be colinear. In the example of FIG. 10B, the motor centerline **2000** and transmission centerline **3010** are shown as colinear. Thus, dimensions measured from the motor centerline **2000** will be the same as dimensions measured from the transmission centerline **3010** in the example shown in FIG. 10B, as well as FIG. 15B

FIG. 10B shows nonlimiting examples of positions of the tool center of gravity **900** as it can be located using various combinations of battery 12 Ah values and diameter of jaws attached, *e.g*.:

FIG. 10B shows the tool center of gravity **900A** is shown at a distance **2900A** of 0 mm away from the motor centerline **2000** (and/or transmission centerline **3010)** and at a distance **8900A** of 123 mm from the top side **40** when a 5Ah power tool battery pack **12** and an expansion head **1330** having 1" plurality of jaws **31** are attached. In an embodiment, the motor centerline **2000** passes through the tool center of gravity **900,** *e.g.* the tool center of gravity **900A.** In an embodiment, the transmission centerline **3010** centerline passes through the tool center of gravity **900,** *e.g.* the tool center of gravity **900A.**

FIG. 10B shows the tool center of gravity **900B** is shown at a distance **2900B** of 16mm away from the motor centerline **2000** (and/or transmission centerline **3010)** in the +X direction and at a distance **8900B** of 97mm from the top side **40** when a 2Ah power tool battery pack **12** and an expansion head **1330** having 1.5" plurality of jaws **31** are attached.

FIG. 10B shows the tool center of gravity **900C** is shown at a distance **2900C** of 7mm away from the motor centerline **2000** (and/or transmission centerline **3010)** in the -X direction and at a distance **8900C** of 118mm from the top side **40** when a 2Ah power tool battery pack **12** and an expansion head **1330** having 1" plurality of jaws **31** are attached.

FIG. 10B shows the tool center of gravity **900D** is shown at a distance **2900D** of 24mm away from the motor centerline **2000** (and/or transmission centerline **3010)** in the +X direction and at a distance **8900D** of 188mm from the top side **40** when a 15Ah power tool battery pack **12** and an expansion head **1330** having 1.5" plurality of jaws **31** are attached.

FIG. 10B shows the tool center of gravity **900E** is shown at a distance **2900E** of 12mm away from the motor centerline **2000** (and/or transmission centerline **3010)** in the +X direction and at a distance **8900E** of 194mm from the top side **40** when a 15Ah power tool battery pack **12** and an expansion head **1330** having 1" plurality of jaws **31** are attached.

FIG. 10B also shows a horizontal configuration distance **2999,** which is also shown in FIG. 15B.

In the embodiment shown in FIG. 10B, the tool center of gravity **900** are located within the upper grip volume **204** for each respective battery attached and each respective expansion head **1330** attached.

FIG. 10C is a top side cross section view of a section of the upper grip **200.**

FIG. 10D showing a variety of diameter and contour curves. FIG. 10D shows a curve **C1,** a curve **C2** and a curve **C3,** each of which are example contour curves associated with the ergonomics of the upper grip **200** of the handle **300.** FIG. 10D also shows a curve **C4** which is an example contour curve associated with the ergonomics of the lower grip **400** and the handle **300.**

FIG. 10D shows a circumference **A** which is an example girth circumference associated with the ergonomics of the upper grip **200** of the handle **300.** FIG. 10D shows a circumference **B** and a circumference **C,** each of which are example girth circumferences associated with the ergonomics of the lower grip **400** and the handle **300.** In an embodiment, circumference **A** can be in a range of 115 mm to 210 mm, *e.g.* 125 mm, 145 mm, 160 mm, or 180 mm. In an embodiment, circumference **B** can be in a range of 130 mm to 210 mm, *e.g.* 130 mm, 145 mm, 160 mm, or 180 mm. In an embodiment, circumference **C** can be in a range of 115 mm to 210 mm, *e.g.* 125 mm, 145 mm, 160 mm, or 180 mm.

FIG. 10E shoes geometric relationships of a cross section of the handle **300** taken from the left side **90** through a portion of the upper grip **200.** In an embodiment, as shown in FIG, 10D and 10E, a grip, *e.g.* upper grip **200,** or lower grip **400** can have an oval grip designed for ergonomic comfort of a user.

As shown in FIG. 10E, the grip can have a grip cross sectional shape **291** which can be oval and can have a grip minor axis **222,** *e.g.* an upper grip minor axis **220,** and a grip major axis **231,** *e.g.* an upper grip major axis **230.** The grip can have a grip width maximum diameter **216.** The grip can have a grip width maximum radius **213,** a grip front maximum length **236,** a grip back maximum length **241** and a grip length maximum length **251.**

In an embodiment, a grip width maximum radius **213** can be in a range of from 15 mm to 40 mm, or 20 mm to 30 mm. In an embodiment, a width maximum diameter **216** can be in a range of from 15 mm to 50 mm, or 15 mm to 40 mm, or 20 mm to 30 mm.

In an embodiment, a grip minor axis **222** in a range of 15 mm to 40 mm, or 20 mm to 30 mm, *e.g.* 15 mm, 20 mm, 25 mm, 30 mm. In an embodiment, a grip major axis **231** in a range of from 15 mm to 60 mm, *e.g.* 15 mm, 25 mm, 30 mm, 45 mm.

In an embodiment, a grip front maximum length **236** can be in a range of from 15 mm to 60 mm, *e.g.* 15 mm, 25 mm, 30 mm, 45 mm. In an embodiment, a grip back maximum length **241** can be in a range of from 15 mm to 60 mm, *e.g.* 15 mm, 25 mm, 30 mm, 45 mm. In an embodiment, a grip length maximum length **251** can be in a range of from 20 mm to 85 mm, *e.g.* 25 mm, 30 mm, 35 mm, 40 mm, 50 mm, 51.35 mm, 55 mm, 65 mm, or 75 mm.

In an embodiment, an upper grip width maximum radius **210** can be in a range of from 15 mm to 40 mm, e.g. 20 mm, 25 mm, 30 mm or 35 mm. In an embodiment, an upper grip width maximum diameter **215** can be in a range of from 20 mm to 75 mm, *e.g.* 25 mm, 30 mm, 35 mm, 40 mm, 42.08 , 45 mm, 50 mm, or 60 mm.

In an embodiment, an upper grip minor axis **220** in a range of 15 mm to 40 mm, *e.g.* 15 mm, 20 mm, 25 mm, 30 mm. In an embodiment, an upper grip major axis **230** in a range of 15 mm to 60 mm, *e.g.* 15 mm, 20 mm, 25 mm, 30 mm, 45 mm.

In an embodiment, an upper grip front maximum length **235** can be in a range of from 15 mm to 60 mm. In an embodiment, an upper grip back maximum length **240** can be in a range of from 15 mm to 30, or 20 mm to 30 mm. In an embodiment, an upper grip length maximum length **250** can be in a range of from 20 mm to 85 mm, *e.g.* 25 mm, 30 mm, 40 mm, 50 mm, 60 mm, 70 mm, 75 mm or 80 mm.

In embodiments, the dimensions of the lower grip **400** can be analogous to and have the same dimensional ranges and values as the upper grip **200.**

FIG. 11 expanding tool **10** center of gravity locations for the bare tool without an expansion head **1330** and without a battery. FIG. 11 shows a bare tool gearbox assembly center of gravity **BT800.** In an embodiment, the bare tool gearbox assembly center of gravity **BT800** can be the same as the gearbox assembly center of gravity **800** (FIG. 10A). FIG. 11 shows a bare tool center of gravity **BT900** with no battery **12** and with no expansion head **1330.**

FIG. 11 shows a bare tool motor center of gravity **BT850.** In an embodiment, the bare tool motor center of gravity **BT850** can be the same as the motor center of gravity **850.**

While, the bare tool's weight distribution changes when it's attached with different batteries, the **CG** is bounded within a defined space, *e.g.* CG containment space **9900** (FIG. 7C).

### Tool Weight

In an embodiment, the weight of the expanding tool **10** without the power tool battery pack **12** can be in a range of 3.0 lbs to 12 lbs, *e.g.*: 4 lbs, 5 lbs, 6 lbs, 7 lbs, 8 lbs, 9 lbs, 10 lbs, or 11 lbs.

In an embodiment, the bare tool with no power tool battery pack **12** version of the expanding tool **10** can have a bare tool weight with no power tool battery pack **12** in a range of 2500 g to 3500 g, or 3000 g to 5000 g.

In an embodiment, a cordless version of the expanding tool **10** can have a "bare tool" weight, *i.e*. without a power tool battery pack **12** attached (no battery pack) in a range of 2500 g to 3500 g, or 3000 g to 5000 g.

In an embodiment, an AC version of the expanding tool **10** can have a "bare tool" weight with no power tool battery pack **12** in a range of 2500 g to 3500 g, or 3000 g to 5000 g. In an embodiment, a power cord **9121** (not shown) version of the expanding tool **10** can have a bare tool weight with no power tool battery pack **12** in a range of 2500 g to 3500 g, or 3000 g to 5000 g.

In an embodiment, the expanding tool **10** can have a tool weight including an attached power tool battery pack **12** of 3000 g to 5000 g, or 2500 g to 4000 g, or 3500 g to 4000 g.

In non-limiting example, power tool battery pack **12** weights can range from 250 g to 2000 g. For example, a 4Ah a 10Ah battery pack **12** can weigh 638g (4Ah/638g) and a 10Ah battery pack **12** can weigh 1048g (10Ah/1048g).

### Tool Runtime

The runtime, or duration, of operation varies based upon a number of factors for nonlimiting example jaw size, battery Ah value, ambient temperature during operation, and other factors.

In an embodiment, the expanding tool **10** can be operated using a 2 Ah battery **12** using a current of 2A for a duration in a range of 0.25 hrs to 3hrs, *e.g.* 0.5 hrs, 0.75 hrs, 1.0 hrs, or 2.0 hrs. In an embodiment, the expanding tool **10** can be operated using a 4 Ah battery **12** using a current of 20A to 30A for a duration in a range of 0.1 hrs to 5 hrs, *e.g.* 0.2 hrs, 0.25 hrs, 0.5 hrs, 0.75 hrs, 1.0 hrs, or 2.0 hrs, 2.5 hrs, 3.0 hrs. In an embodiment, the expanding tool **10** can be operated using a 5 Ah battery **12** using a current of 20A to 30A for a duration in a range of 0.1 hrs to 5 hrs, e.g. 0.2 hrs, 0.25 hrs, 0.5 hrs, 0.75 hrs, 1.0 hrs, or 2.0 hrs, 2.5 hrs, 3.0 hrs. In an embodiment, the expanding tool **10** can be operated using a 10 Ah battery **12** using a current of 5A for a duration in a range of 0.1 hrs to 3hrs, e.g. 0.2 hrs, 0.25 hrs, 0.5 hrs, 0.75 hrs, 1.0 hrs, or 2.0 hrs. In an embodiment, the expanding tool **10** can be operated using a 15 Ah battery **12** using a current of 10A for a duration in a range of 0.1 hrs to 4hrs, e.g. 0.2 hrs, 0.25 hrs, 0.5 hrs, 0.75 hrs, 1.0 hrs, 2.0 hrs, or 2.5 hrs. In an embodiment, the expanding tool **10** can be operated using a 20 Ah battery **12** using a current of 15A for a duration in a range of 0.1 hrs to 4hrs, e.g. 0.2 hrs, 0.25 hrs, 0.5 hrs, 0.75 hrs, 1.0 hrs, 2.0 hrs, or 2.5 hrs.

FIG. 12A shows a palm side of a typical human right hand and its various regions.

A hand **5000** can be described using both medical terminology and palmistry (palm reading) terminology so as to understand regions of the hand being specified for reference herein. FIG. 12A shows hand **5000** having a palm **5002** which has an upper palm **5005,** a middle palm (plain of mars) **5050,** and a lower palm **5007.** The hand **5000** has five fingers **5003,** *i.e.:* the thumb **5100** adjacent to a thenar **5010;** a Jupiter finger (pointer finger) **5200** adjacent to a mount Jupiter **5201;** a Saturn finger (middle finger) **5300** adjacent to a mount Saturn **5301;** an Apollo finger (ring finger) **5400** adjacent to a mount Apollo **5401;** a Mercury finger (pinky finger) **5500** adjacent to a mount Mercury **5501** which is adjacent to an upper mars **5502.** The palm also has a thenar **5010** adjacent to a thumb **5100** and a mount of Venus **5012.** FIG. 12A shows the purlicue **5115** located between the thumb **5100** and the Jupiter finger **5200.** A lower mars **5101** is also shown adjacent to the Jupiter finger **5200.** The hypothenar **5055** is shown adjacent to the upper mars **5502** and middle palm **5050.**

FIG. 12A shows an example of a finger grip curve **5600** which can for example cross the Jupiter finger **5200** proximate to the distal phalange **5203,** the Saturn finger **5300** across the middle phalange **5302,** the Apollo finger **5400** across the middle phalange **5402** and the Mercury finger **5500** proximate to the distal phalange **5503.**

The position in which the finger grip curve **5600** lies on a given operators hand can be a function of the size and shape of the operator's hand and how the operators hand matches finger position to a finger grip.

FIG. 12A also shows a palm grip curve **5700** which for example can cross the hypothenar **5055** proximate to the lower palm **5007,** a lower portion of the middle palm **5050,** an upper portion of the thenar **5010** and the purlicue **5115** between the mount of Venus **5012** and the lower mars **5101.**

FIG. 12B shows a palm side of a typical human right hand and a gripping cavity **901.** FIG. 12B shows the gripping cavity **901** of an example palm **5002** configuration. FIG. 7 provides contour lines to show the shape of an example of the gripping cavity **901** of hand **5000.** The gripping configuration of hand **5000** in FIG. 12B shows the finger grip curve **5600** and the palm grip curve **5700** configure to respectively grip either the upper grip **200,** or the lower grip **400.**

As shown by the contour lines of FIG. 12B, the gripping cavity **901** can have a gripping cavity shape **905** which bounds a gripping cavity volume **910.**

FIG. 12B also shows the back of hand **6000,** as well as the dorsal interossei muscles **6500** and/or first (1^{st}) dorsal interosseous muscle **6600.**

FIG. 13A shows a left side **90** view of a user's right hand gripping the expanding tool **10** upper grip **200** and upper trigger **13U** of trigger **13T.** FIG. 13A shows expanding tool **10** having a tool center of gravity **900** between the cam spindle centerline **1000** and the motor centerline **2000.** FIG. 13A shows a user hand **5000** gripping the upper grip **200** of the expanding tool **10** of FIG. 1. The upper palm grip **201** ergonomically fits into the gripping cavity **901** of a user's palm **5002.** The tool center of gravity **900** is shown within the grip of the hand **5000** of the operator.

FIG. 13A shows an example of the user's hand **5000** ergonomically fitting into the upper palm grip volume **205** and the upper finger grip volume **209.** FIG. 13A shows how the palm **5002** of the user fits into and reversibly engages with the upper palm grip volume **205.** FIG. 13A also shows how the fingers **5003** of the user fits into and reversibly engages with the upper finger grip volume **209.**

In the embodiment of FIG. 13A, the tool center of gravity **900** is placed within the handle interior volume **315** and surrounded at least in part by the user's griping palm **5002.** FIG. 13A shows the purlicue **5115** of the user's hand **5000** gripping the upper grip and adjacent to the head assembly **100.** FIG. 13A shows the tool center of gravity **900** at least in part surrounded by and/or adjacent to gripping cavity volume **910** and/or gripping cavity shape **905** of palm **5002.**

FIG. 13A shows an example of a configuration in which the cam spindle centerline **1000,** the cam opening centerline **9901** and the cam spindle drive gear centerline **9550** are colinear and all pass through the back of hand **6000** of the user. In the embodiment of FIG. 13A, the cam spindle centerline **1000,** the cam opening centerline and the cam spindle drive gear centerline **9550** are colinear and pass through the lower mars **5101** portion of the user's hand **5000.** In the embodiment of FIG. 13A, the cam spindle centerline **1000,** the cam opening centerline **9901** and the cam spindle drive gear centerline **9950** are colinear and pass through the dorsal interossei muscles **6500** of the user's hand **5000.** As shown in FIG. 13A each of the cam spindle centerline **1000,** the cam opening centerline **9901** and the cam spindle drive gear centerline **9950** are colinear and pass through the back of hand **6000,** as well as pass through or are located proximate to the dorsal interossei muscles **6500** and/or first (1^{st}) dorsal interosseous muscle **6600.**

FIG. 13A shows the configuration of the cam spindle centerline **1000,** the cam opening centerline **9901** and the cam spindle drive gear centerline **9550** to all pass through the upper mars **5502** portion of the user's hand **5000** configures the cam **221,** e.g. radial cam **21,** the cam spindle **150** and the cam spindle drive gear **3550G** above the user's hand **5000,** and above the back of hand **6000** of user.

As shown in FIG. 13A the motor centerline **2000** and transmission centerline **3010** and drive shaft centerline **3459** are configured within and/or are at least in part surrounded by and/or pass through the gripping cavity **901** and/or gripping cavity volume **910** and/or the gripping cavity shape **905.** As shown in FIG. 13A the motor centerline **2000** and transmission centerline are configured within and/or are at least in part surrounded by one or more of the fingers **5003,** *i.e*.: mercury finger (pinky finger) **5500,** Appollo finger (ring finger) **5400,** Saturn finger (middle finger) **5300,** Jupiter finger (pointer finger) **5200** and/or thumb **5100,** when the hand **5000** of the operator grips the upper grip **200.** As shown in FIG. 13A the motor centerline **2000** and transmission centerline are configured within and/or are at least in part surrounded by the palm **5002,** when the hand **5000** of the operator grips the upper grip **200.**

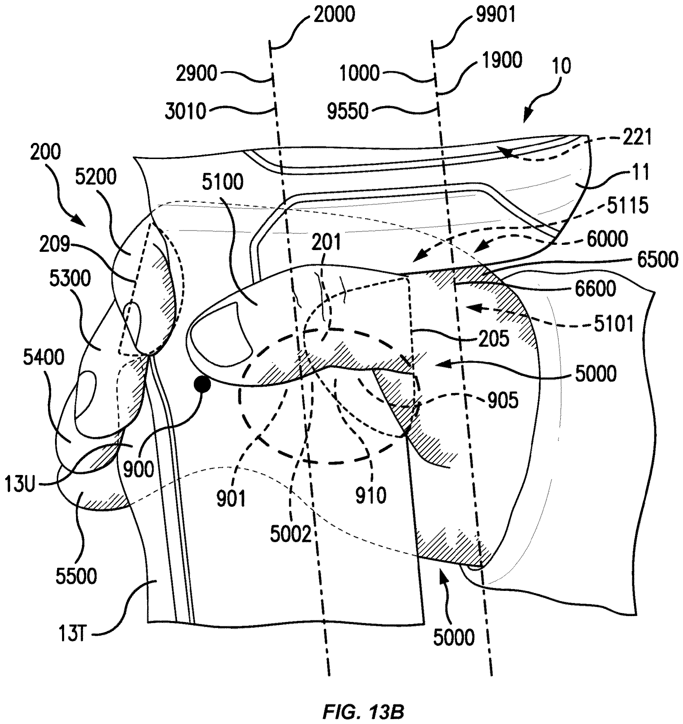

FIG. 13B shows a left-side view of a user's right hand gripping the expanding tool **10** upper grip **200** and upper trigger **13U** having a tool center of gravity **900** between the cam spindle centerline **1000** and/or cam spindle centerline plane **1900** and the trigger **13T.** FIG. 13B also shows the expanding tool **10** upper grip **200** and upper trigger **13U** having a tool center of gravity **900** between the motor centerline **2000** and/or motor centerline plane **2900** and the trigger **13T.**

FIG. 13C shows a detail perspective view of the upper grip volume **204** and the lower grip volume **404.**

In embodiments, the inner structure weight distribution and tool's center of gravity. As shown in FIG. 13C, the tool center of gravity **900** is configured in the upper grip **200** and at least in part surrounded by a user's hand **5000** when a user grasps the tool.

### Configuration Of The Motor Centerline

As shown in FIG. 13C, in an embodiment, the motor centerline **2000** can be configured within a grip volume **4000.** In an embodiment, the motor centerline **2000** can be configured within an upper grip volume **204.** In an embodiment, the motor centerline **2000** can be configured within an upper grip **200.** In an embodiment, the motor centerline **2000** can be configured within a lower grip volume **404.** In an embodiment, the motor centerline **2000** can be configured within a lower grip **400.** In an embodiment, the motor centerline **2000** can be configured within a handle **300.** In an embodiment, the motor centerline **2000** can be configured within a handle housing **311.** In an embodiment, the motor centerline **2000** can be configured within a handle interior volume **345.**

As shown in FIG. 10D, in an embodiment, the motor centerline **2000** can be configured within circumference **C2** and/or within circumference **B** and/or within circumference **C.** As shown in FIG. 10E, in an embodiment, the motor centerline **2000** can be configured within and/or to pass through a grip cross sectional shape **291.**

In an embodiment, the motor centerline **2000** can be configured proximate to the trigger assembly **350.**

As shown in FIG. 13A, in an embodiment, the motor centerline **2000** can be configured to be within the grip of an operator's hand **5000** when the operator is gripping the expanding tool **10.** In an embodiment, as shown in FIG. 13A, the motor centerline **2000** can be configured to be within the grasp of a gripping cavity volume **910** and/or gripping cavity shape **905** of an operator's hand **5000** when the operator is gripping the expanding tool **10**

### Configuration Of The Transmission Centerline

In an embodiment, the transmission centerline **3010** can be configured within a grip volume **4000.** In an embodiment, as shown in FIGS 7A and 13C the transmission centerline **3010** can be configured within an upper grip volume **204.** In an embodiment, the transmission centerline **3010** can be configured within an upper grip **200.** Also as shown in FIGS 7A and 13C, the transmission centerline **3010** can be configured within a lower grip volume **404.** In an embodiment, the transmission centerline **3010** can be configured within a lower grip **400.**

As shown in FIGS 7A, 8 and 13C In an embodiment, the transmission centerline **3010** can be configured within a handle **300** and/or within a handle housing **311** and/or within a handle interior volume **345.** As shown in FIG. 10D, the transmission centerline **3010** can be configured within circumference **C2** and/or within circumference **B** and/or within circumference **C.** As shown in FIG. 10E, In an embodiment, the transmission centerline **3010** can be configured within and/or to pass through a grip cross sectional shape **291.**

As shown in FIG. 13A and FIG. 14, the transmission centerline **3010** can be configured to be within the grip of an operator's hand **5000** when the operator is gripping the expanding tool **10.** In an embodiment, the transmission centerline **3010** can be configured to be within the grasp of a gripping cavity volume **910** and/or gripping cavity shape **905** of an operator's hand **5000** when the operator is gripping the expanding tool **10.**

In an embodiment, the transmission centerline **3010** can be configured proximate to the trigger assembly **350.** In an embodiment, the motor centerline **2000** and the transmission centerline **3010** can be coaxial and/or colinear.

### Configuration Of The Driveshaft Centerline

As shown in FIG. 13C, in an embodiment, the driveshaft centerline **3459** can be configured within a grip volume **4000.** As shown in FIGS 7A, 13A and 13C, the driveshaft centerline **3459** can be configured within an upper grip volume **204** and/or within an upper grip **200.** As shown in FIGS 7A, 13C and 14, the driveshaft centerline **3459** can be configured within a lower grip volume **404** and/or within a lower grip **400.**

As shown in FIGS 7A, 8 and 13C, the driveshaft centerline **3459** can be configured within a handle **300** and/or within a handle housing **311.** As shown in FIGS 7A, 8 and 13C, the driveshaft centerline **3459** can be configured within a handle interior volume **345.**

As shown in FIG. 10D, the driveshaft centerline **3459** can be configured within circumference **C2** and/or within circumference **B** and/or within circumference **C.** As shown in FIG. 10E, the driveshaft centerline **3459** can be configured within and/or to pass through a grip cross sectional shape **291.**

As shown in FIG. 13A and FIG. 14, the driveshaft centerline **3459** can be configured to be within the grip of an operator's hand **5000** when the operator is gripping the expanding tool **10.** In an embodiment, the driveshaft centerline **3459** can be configured to be within the grasp of a gripping cavity volume **910** and/or gripping cavity shape **905** of an operator's hand **5000** when the operator is gripping the expanding tool **10.**

In an embodiment, the driveshaft centerline **3459** can be configured proximate to the trigger assembly **350.**

In an embodiment, the motor centerline **2000** and the driveshaft centerline **3459** can be coaxial and/or colinear. In an embodiment, the transmission centerline **3010** and the driveshaft centerline **3459** can be coaxial and/or colinear. In an embodiment, the motor centerline **2000** and the transmission centerline **3010** and the driveshaft centerline **3459** can be coaxial and/or colinear.

FIG. 14 shows a left-side view of a user's right hand gripping the expanding tool's lower grip **400** and a lower portion of trigger **13T.** FIG. 14 shows a user hand **5000** gripping the lower grip **400** of the expanding tool **10** of FIG. 1. The lower palm grip **1401** ergonomically fits into the gripping cavity **901** of a user's palm **5002.** In the embodiment of FIG. 14, the tool center of gravity **900** is placed within the handle interior volume **315.** FIG. 14 shows the user's hand **5000** gripping the lower grip **400** and adjacent to the battery pack **12.**

In the embodiment of FIG. 14, when gripping the lower grip **400** the cam spindle centerline **1000,** the cam opening centerline **9901** and the cam spindle drive gear centerline **9550** to all pass through the lower mars **5101** portion of the user's hand **5000** and the back of hand **6000** of the user.

FIG. 14 shows an example of a configuration in which the cam spindle centerline **1000,** the cam opening centerline **9901** and the cam spindle drive gear centerline **9550** are colinear and all pass through the back of hand **6000** of the user. In the embodiment of FIG. 14, the cam spindle centerline **1000,** the cam opening centerline and the cam spindle drive gear centerline **9550** are colinear and pass through the lower mars **5101** portion of the user's hand **5000.** In the embodiment of FIG. 14, the cam spindle centerline **1000,** the cam opening centerline **9901** and the cam spindle drive gear centerline **9950** are colinear and pass through the dorsal interossei muscles **6500** of the user's hand **5000.** As shown in FIG. 14 each of the cam spindle centerline **1000,** the cam opening centerline **9901** and the cam spindle drive gear centerline **9950** are colinear and pass through the back of hand **6000,** as well as pass through or are located proximate to the dorsal interossei muscles **6500** and/or first (1^{st}) dorsal interosseous muscle **6600.**

As shown in FIG. 14 the motor centerline **2000** and transmission centerline **3010** and drive shaft centerline **3459** are configured within and/or are at least in part surrounded by and/or pass through the gripping cavity **901** and/or gripping cavity volume **910** and/or the gripping cavity shape **905.** As shown in FIG. 14 the motor centerline **2000** and transmission centerline are configured within and/or are at least in part surrounded by one or more of the fingers **5003,** *i.e*.: mercury finger (pinky finger) **5500,** Appollo finger (ring finger) **5400,** Saturn finger (middle finger) **5300,** Jupiter finger (pointer finger) **5200** and/or thumb **5100,** when the hand **5000** of the operator grips the upper grip **200.** As shown in FIG. 14 the motor centerline **2000** and transmission centerline are configured within and/or are at least in part surrounded by the palm **5002,** when the hand **5000** of the operator grips the upper grip **200.**

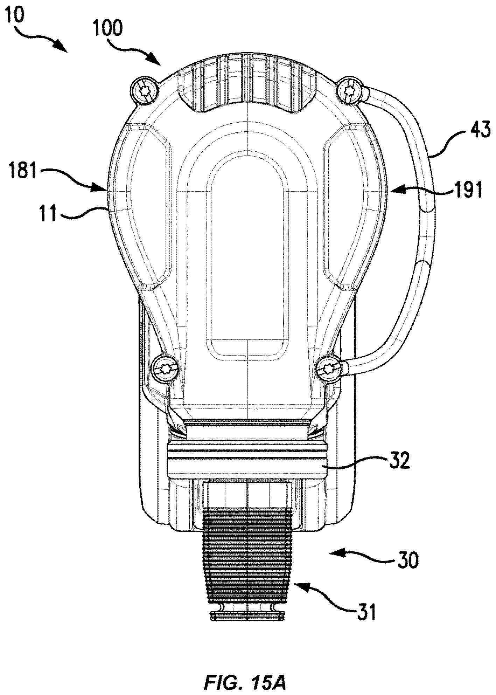

FIG. 15A is a top side **40** view of the expanding tool **10.**

FIG. 15B is a top side **40** view of the expanding tool **10** showing a variety of tool center of gravity **900** locations. FIG. 15B shows a top view of the tool center of gravity 900 examples of FIG. 10B, e.g. 900A, 900B, 900C, 900D and 900E, along the X axis.

FIG. 15B shows the tool center of gravity **900A** is shown at a distance **2900A** of 0 mm away from the motor centerline **2000** (and/or transmission centerline **3010)** when a 5Ah power tool battery pack **12** and an expansion head **1330** having 1" plurality of jaws **31** are attached.

FIG. 15B shows the tool center of gravity **900B** is shown at a distance **2900B** away from the motor centerline **2000** (and/or transmission centerline **3010)** in the +X direction when a 2Ah power tool battery pack **12** and an expansion head **1330** having 1.5" plurality of jaws **31** are attached.

FIG. 15B shows the tool center of gravity **900C** is shown at a distance **2900C** away from the motor centerline **2000** (and/or transmission centerline **3010)** in the -X direction when a 2Ah power tool battery pack **12** and an expansion head **1330** having 1" plurality of jaws **31** are attached.

FIG. 15B shows the tool center of gravity **900D** is shown at a distance **2900D** 24mm away from the motor centerline **2000** (and/or transmission centerline **3010)** in the +X direction when a 15Ah power tool battery pack **12** and an expansion head **1330** having 1.5" plurality of jaws **31** are attached.

FIG. 15B shows the tool center of gravity **900E** is shown at a distance **2900E** away from the motor centerline **2000** (and/or transmission centerline **3010)** in the +X direction when a 15Ah power tool battery pack **12** and an expansion head **1330** having 1" plurality of jaws **31** are attached.

In the example shown in FIG. 15B (and FIG. 10B), each of tool center of gravity 900D, 900B and 900E are a distance which is a +X value away from the motor centerline **2000** and/or transmission centerline **3010.** In the example shown in FIG. 15B (and FIG. 10B), the motor centerline **2000** and/or transmission centerline **3010** passes through tool center of gravity 900A. In the example shown in FIG. 15B (and FIG. 10B), the tool center of gravity 900C is a -X value away from the motor centerline **2000** and/or transmission centerline **3010.**

As shown in FIG. 15B, as used with various of battery **12** and of expansion head **1330,** the tool center of gravity **900** can be configured at different locations along a horizontal configuration distance **2999.**

FIG. 16 is a bottom side **60** view of the expanding tool **10** with a battery **12** attached.

This disclosure regards a hand tool and its many aspects, features and elements. Such an apparatus can be dynamic in its use and operation. This disclosure is intended to encompass the equivalents, means, systems and methods of the use of the expanding tool **10** and its many aspects consistent with the description and spirit of the apparatus, means, methods, functions and operations disclosed herein. Other embodiments and modifications will be recognized by one of ordinary skill in the art as being enabled by and within the scope of this disclosure.

The scope of this disclosure is to be broadly construed. The embodiments herein can be used together, separately, mixed or combined. It is intended that this disclosure disclose and/or encompass equivalents, means, systems and methods to achieve the devices, designs, operations, control systems, controls, activities, mechanical actions, dynamics and results disclosed herein. For each mechanical element or mechanism disclosed, it is intended that this disclosure also encompasses within the scope of its disclosure and teaches equivalents, means, systems and methods for practicing the many aspects, mechanisms and devices disclosed herein. The claims of this application are likewise to be broadly construed.

The description of the technology herein in its many and varied embodiments is merely exemplary in nature and, thus, variations that do not depart from the gist of the disclosure are intended to be within the scope of the claims and the disclosure herein. Such variations are not to be regarded as a departure from the spirit and scope of the disclosed technologies.

It will be understood that the above description and the drawings are examples of particular implementations of the invention, but that other implementations of the invention are included in the scope of the claims.

It will be appreciated that various modifications and changes can be made to the above-described embodiments of the hand tool as disclosed herein without departing from the spirit and the scope of the claims.

## Claims

1. A tool for expanding the end of a pipe, comprising:
a cam (221) which drives a plurality of jaws (31) from a closed position to an open position;
a motor (15) having a motor centerline (2000) configured within a grip volume (4000);
a cam spindle (150) having a cam spindle centerline (1000), the cam spindle centerline (1000) at a cam spindle centerline distance (2100) from the motor centerline (2000);
a transmission (3000) selectively driven by the motor (15) which selectively drives the cam spindle (150);
a cam (221) driven by the cam spindle (150); and
a wedge (24) driven by the cam (221) and configured to drive the plurality of jaws (31).

2. The tool for expanding the end of a pipe according to claim 1, further comprising:
a tool center of gravity (900) configured between at least a portion of the cam (221) and at least a portion of the motor (15).

3. The tool for expanding the end of a pipe according to claim 1 or 2, further comprising:
a cam spindle centerline plane (1900); and
a motor centerline plane (2900),
wherein the tool center of gravity (900) is configured between the cam spindle centerline plane (1900) and the motor centerline plane (2900).

4. The tool for expanding the end of a pipe according to any preceding claim, further comprising:
a handle (300) having a handle interior volume (345),
wherein the tool center of gravity (900) is configured within the handle interior volume (345).

5. The tool for expanding the end of a pipe according to any preceding claim, further comprising:
a grip (2700),
wherein the cam spindle centerline (1000) passes through a portion of an operator's hand when a user grips the grip (2700).

6. A tool for expanding the end of a pipe according to any preceding claim, wherein the motor centerline (2000) passes through at least a portion of the wedge (24).

7. The tool for expanding the end of a pipe according to any preceding claim, further comprising:
a tool weight in a range of 3 lbs to 10 lbs when a battery (12) is not attached.

8. The tool for expanding the end of a pipe according to claim 1, further comprising:
a transmission centerline (3010) aligned with the motor centerline (2000);
a drive gear (3490) driven by the transmission (3000); and
a cam spindle drive gear (3550G) having a cam spindle drive gear centerline (9550),
wherein the drive gear (3490) drives the cam spindle drive gear (3550G),
wherein the cam spindle drive gear (3550G) is located adjacent to the drive gear (3490) and the cam spindle drive gear centerline (9550) is at a distance from the motor centerline (2000).

9. A tool for expanding the end of a pipe according to claim 1, further comprising:
an upper grip (200) configured at least in part between a portion of a cam spindle (150) and a portion of the motor (15) or an upper grip (200) configured at least in part between a portion of the cam spindle (150) and a portion of the transmission (3000).

10. A tool according to claim 1, further comprising:
a trigger (13T); and
a tool center of gravity (900),
wherein the tool center of gravity (900) is configured adjacent to the trigger (13T).

11. A tool according to claim 1, further comprising:
a tool center of gravity (900) configured adjacent to a portion of the transmission (3000).

12. A tool for expanding the end of a pipe, comprising:
a motor (15) having a motor centerline (2000) configured within a grip volume (4000);
a cam spindle (150) having a cam spindle centerline (1000), said cam spindle centerline (1000) at distance from said motor centerline (2000);
a transmission (3000) having a cam spindle drive stage (3500D) having a cam spindle drive gear (3550G) configured to selectively drive a rotation of said cam spindle (150); and
a head assembly (100) having a plurality of jaws (31) selectively driven by the rotation of the cam spindle (150).

13. The tool according to claim 12, further comprising:
a gear adjacent to and making external contact with said cam spindle drive gear (3550G) to drive a rotation of said cam spindle drive gear (3550G) when driven by said motor (15).

14. The tool according to claim 12 or 13, further comprising:
a radial cam (21) having a radial cam spindle opening centerline (9921),
wherein the radial cam spindle opening centerline (9921) is at a distance from the motor (15) centerline.

15. The tool according to claim 12 or 13, further comprising:
an upper palm grip (201) having an upper palm grip volume (205);
a radial cam (21) having a radial cam spindle opening centerline (9921),
wherein said radial cam spindle opening centerline (9921) is configured to vertically extend though at least a portion of the upper palm grip volume (205).

16. A method, comprising the steps of:
providing a expanding tool (10) for expanding the end of a pipe having;
a expansion head (1330) having a plurality of jaws (31) selectively having a closed position and an open position,
a motor centerline (2000) configured within a grip volume (4000),
a motor (15) having a motor centerline (2000) and a motor centerline plane (2900) at a distance from a cam spindle centerline (1000),
a transmission (3000) having a cam spindle drive stage (3500D) having a cam spindle drive gear (3550G) configured to selectively drive a rotation of said cam spindle (150),
a cam (221) driven by the cam spindle (150);
a wedge (24) driven by the cam (221) and configured to
drive the plurality of jaws (31), and
bounding a tool center of gravity (900) between said motor centerline plane (2900) and said cam spindle centerline plane (1900).

17. The method according to claim 16, further comprising the step of:
bounding the tool center of gravity (900) between said cam spindle centerline plane (1900) and a portion of said motor (15) or bounding the tool center of gravity (900) between said wedge (24) centerline plane and a transmission plane (9310).
